# EUROPEAN PATENT APPLICATION

(11) **EP 4 827 182 A1**
(43) Date of publication of application: **21.10.2026**
(21) Application number: 24915978.1
(22) Date of filing: 10.01.2024
(51) Int. Cl.: H04W 52/02

(54) **CELL MEASUREMENT METHOD AND APPARATUS, THRESHOLD CONFIGURATION METHOD AND APPARATUS, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: ZHANG, Jinyu, Dongguan, Guangdong 523860 (CN); HU, Rongyi, Dongguan, Guangdong 523860 (CN)
(74) Representative: Penza, Giancarlo
(86) International application number: PCT/CN2024/071576
(87) International publication number: WO 2025/147898

(57) **Abstract**

The present application belongs to the field of mobile communications. Disclosed are a cell measurement method and apparatus, a threshold configuration method and apparatus, and a device and a storage medium. The method comprises: on the basis of a measurement result and threshold values, determining to use at least one of a first receiver and a second receiver to perform cell measurement, wherein the measurement result comprises at least one of a first measurement result and a second measurement result, the first measurement result being obtained by means of the measurement of the first receiver, the second measurement result being obtained by means of the measurement of the second receiver; the power consumption of the first receiver is higher than that of the second receiver; and the second measurement result corresponds to a plurality of threshold values. The present application specifies an implementation mode of cell measurement by a terminal in the case of a second receiver involving low power consumption.

## Description

### TECHNICAL FIELD

The present disclosure relates to the field of mobile communication, in particular to a cell measurement method and apparatus, a threshold configuration method and apparatus, and a device and a storage medium.

### BACKGROUND

In order to achieve energy saving and ensure a shorter response delay, a low power wake up receiver (LP-WUR) is introduced for a terminal. When the terminal determines that there is no data service, it turns off a main radio (MR) or enables the MR to enter a deep sleep state, and only turns on the LP-WUR for simply monitoring a wake up signal (WUS). When the terminal receives the wake up signal, it needs to wake up the MR to perform complex data transmission and reception.

In a case where the LP-WUR is introduced for the terminal, the specific implementation of performing cell measurement by the terminal needs to be further discussed and researched.

### SUMMARY

The present disclosure provides a cell measurement method and apparatus, a threshold configuration method and apparatus, and a device and a storage medium. The technical solutions are as follows:

Based on an aspect of the present disclosure, there is provided a cell measurement method, the method is performed by a terminal, and the method includes the following operation.

The terminal determines, based on a measurement result and a threshold, to perform cell measurement by using at least one of a first receiver or a second receiver.

Herein, the measurement result includes at least one of a first measurement result or a second measurement result, the first measurement result is acquired through measurement by the first receiver, the second measurement result is acquired through measurement by the second receiver, power consumption of the first receiver is higher than power consumption of the second receiver, and the second measurement result corresponds to a plurality of thresholds.

Based on an aspect of the present disclosure, there is provided a threshold configuration method, the method is performed by a network device, and the method includes the following operation.

The network device configures a threshold to a terminal.

Herein, the threshold is used for the terminal to determine, based on a measurement result and the threshold, to perform cell measurement by using at least one of a first receiver or a second receiver; the measurement result includes at least one of a first measurement result or a second measurement result, the first measurement result is acquired through measurement by the first receiver, the second measurement result is acquired through measurement by the second receiver, and the threshold is used for determining a plurality of thresholds corresponding to the second measurement result.

Based on an aspect of the present disclosure, there is provided a cell measurement apparatus, and the apparatus includes a determination module.

The determination module is configured to determine, based on a measurement result and a threshold, to perform cell measurement by using at least one of a first receiver or a second receiver.

Herein, the measurement result includes at least one of a first measurement result or a second measurement result, the first measurement result is acquired through measurement by the first receiver, the second measurement result is acquired through measurement by the second receiver, power consumption of the first receiver is higher than power consumption of the second receiver, and the second measurement result corresponds to a plurality of thresholds.

Based on an aspect of the present disclosure, there is provided a threshold configuration apparatus, and the apparatus includes a sending module.

The sending module is configured to configure a threshold to a terminal;

Herein, the threshold is used for the terminal to determine, based on a measurement result and the threshold, to perform cell measurement by using at least one of a first receiver or a second receiver; the measurement result includes at least one of a first measurement result or a second measurement result, the first measurement result is acquired through measurement by the first receiver, the second measurement result is acquired through measurement by the second receiver, and the threshold is used for determining a plurality of thresholds corresponding to the second measurement result.

Based on another aspect of the present disclosure, there is provided a terminal. The terminal includes: a processor; a transceiver coupled to the processor; and a memory for storing instructions executable by the processor. Herein, the terminal is configured to load and execute the executable instructions to implement the cell measurement method as described in the above aspects.

Based on another aspect of the present disclosure, there is provided a network device. The network device includes: a processor; a transceiver coupled to the processor; a memory for storing instructions executable by the processor. Herein, the network device is configured to load and execute the executable instructions to implement the threshold configuration method as described in the above aspects.

Based on another aspect of the present disclosure, there is provided a computer-readable storage medium. The computer-readable storage medium stores executable instructions thereon, and the executable instructions are loaded and executed by a processor to implement the cell measurement method or the threshold configuration method as described in the above aspects.

Based on another aspect of the present disclosure, there is provided a chip. The chip includes a programmable logic circuit and/or program instructions. When the chip is run on a computer device, the chip is configured to implement, based on the programmable logic circuit and/or program instructions, the cell measurement method or the threshold configuration method described in the above aspects.

Based on another aspect of the present disclosure, there is provided a computer program product or a computer program, which includes computer instructions stored in a computer-readable storage medium. The computer instructions, when reading and executing by a processor of a computer device, the computer device is enabled to implement the cell measurement method or the threshold configuration method described in the above aspect.

The technical solutions provided by the embodiments of the present disclosure at least include the following beneficial effects.

By determining the receiver to be used for the cell measurement based on the measurement result and the threshold, it is clarified that the implementation of the cell measurement of the terminal when the second receiver with low power consumption is involved. By setting the plurality of thresholds, the corresponding threshold(s) can be selected based on the type of the second receiver to determine the receiver to be used for the cell measurement, thereby avoiding overperformance or underperformance caused by adopting the same performance index for different types of second receivers.

### BRIEF DESCRIPTION OF THE DRAWINGS

In order to more clearly explain the technical solutions in the embodiments of the present disclosure, the following will briefly describe the accompanying drawings that need to be used in the description of the embodiments. It is apparent that the accompanying drawings in the following description are only some embodiments of the present disclosure. For those with ordinary skill in the art, other drawings can be acquired from such drawings without involving creative efforts.
FIG. 1 is a schematic diagram of an LP-WUR of a first architecture according to an exemplary embodiment of the present disclosure.
FIG. 2 is a schematic diagram of an LP-WUR of a second architecture according to an exemplary embodiment of the present disclosure.
FIG. 3 is a schematic diagram of an LP-WUR of a third architecture according to an exemplary embodiment of the present disclosure.
FIG. 4 is a schematic diagram of an LP-WUR of a fourth architecture according to an exemplary embodiment of the present disclosure.
FIG. 5 is a schematic diagram of an LP-WUR of a fifth architecture according to an exemplary embodiment of the present disclosure.
FIG. 6 is a schematic diagram of a process of switching a receiver according to an exemplary embodiment of the present disclosure.
FIG. 7 is a schematic diagram of a system architecture of a communication system according to an exemplary embodiment of the present disclosure.
FIG. 8 is a flowchart of a cell measurement method according to an exemplary embodiment of the present disclosure.
FIG. 9 is a flowchart of a threshold configuration method according to an exemplary embodiment of the present disclosure.
FIG. 10 is a flowchart of a cell measurement method according to an exemplary embodiment of the present disclosure.
FIG. 11 is a flowchart of a cell selection method according to an exemplary embodiment of the present disclosure.
FIG. 12 is a flowchart of a reporting method according to an exemplary embodiment of the present disclosure.
FIG. 13 is a block diagram of a cell measurement apparatus according to an exemplary embodiment of the present disclosure.
FIG. 14 is a block diagram of a threshold configuration apparatus according to an exemplary embodiment of the present disclosure.
FIG. 15 is a schematic structural diagram of a communication device according to an exemplary embodiment of the present disclosure.

### DETAILED DESCRIPTION

In order to make the objectives, technical solutions, and advantages of the present disclosure clearer, implementations of the present disclosure will be described in further detail below with reference to the accompanying drawings. Exemplary embodiments will be described in detail herein, examples of which are shown in the accompanying drawings. When the following description refers to the drawings, unless otherwise indicated, the same numerals in different drawings represent the same or similar elements. The implementations described in the following exemplary embodiments do not represent all implementations consistent with the present disclosure. Rather, they are merely examples of devices and methods consistent with some aspects of the present disclosure as detailed in the appended claims.

The terminology used in the present disclosure is merely for the purpose of describing specific embodiments and is not intended to limit the present disclosure. As used in the present disclosure and the appended claims, the singular forms of "an", "said", and "the" are also intended to include the plural forms unless the context clearly indicates otherwise. It should also be understood that the term "and/or" used herein refers to and includes any or all possible combinations of one or more associated listed items.

It should be understood that, although the terms such as first, second, third, and the like may be used in the present disclosure to describe various information, such information should not be limited to these terms. These terms are used only to distinguish information of the same type from each other. For example, without departing from the scope of the present disclosure, the first information may also be referred to as the second information, and similarly, the second information may also be referred to as the first information. Depending on the context, the expression "if" used herein may be interpreted as "upon" or "when" or "in response to determining".

Firstly, some terms involved in the embodiments of the present disclosure are described as follows.

### Introduction to LP-WUR/WUS:

A conventional terminal energy-saving scheme is generally implemented by periodically waking up the terminal and enabling the terminal to sleep. For example, the terminal wakes up and enters to sleep based on a Discontinuous Reception (DRX) cycle configuration, and the longer the cycle, the better the energy-saving effect. In the related technologies, under the condition of being not at cell edge and/or low mobility, the terminal can perform measurement relaxation on a neighboring cell. For a Reduced Capability (RedCap) terminal, additional measurement relaxation criterion is also introduced. However, it should be noted that all of these measurement relaxations are for the measurements for the neighboring cell by the terminal, and do not include the serving cell of the terminal.

The response delay of the terminal may be increased by configuring a longer DRX cycle, etc. For example, when it is necessary to wake up the terminal exactly at a stage when a sleep period begins, it is necessary to wait for nearly one cycle. The long waiting time is unacceptable for some special services, for example, the response time of fire warning device needs to be controlled within 1s to 2s.

Currently, it is considered to further tap the energy-saving potential of the terminal, while ensuring a shorter response delay. Considering that the current scheme of periodically waking up the MR may cause unnecessary power consumption, for example, waking up the MR when there is no signaling or data transmission during the cycle may cause unnecessary power consumption. In order to solve this problem, the LP-WUR is introduced in the related technologies. The hardware structure of such receiver is simpler, complex and power-consuming devices such as high-precision crystal oscillators are omitted, and energy consumption is reduced from the hardware circuit. When the terminal determines that there is no data service, it turns off the MR or enables the MR to enter the deep sleep state, and only turns on the LP-WUR for simply monitoring the WUS signal to reduce power consumption. When the terminal receives a trigger signal, such as a Low Power-Wake Up Signal (LP-WUS), it needs to wake up the MR to perform complex data transmission and reception, so as to ensure the response delay of the terminal.

For the terminal with LP-WUR, the following enhancements are currently considered.
- At least offloading the measurement for the serving cell from MR to the LP-WUR needs to be considered, which can further reduce the power consumption required for periodic measurement. There is currently no conclusion on whether the LP-WUR is also used for the neighboring cell measurement.
- The LP-WUR may have different receiver architectures; for one example, a receiver based on envelope detection, correspondingly, it is necessary to introduce a reference signal which is a new Low Power-Synchronization Signal (LP-SS); for another example, a receiver based on an Orthogonal Frequency Division Multiplexing (OFDM) waveform, and a reference Signal which is the existing New Radio (NR) Secondary Synchronization Signal (SSS) can be directly reused.
- The above enhancements are mainly for the terminal in Radio Resource Control (RRC) IDLE mode/INACTIVE mode. There is currently no conclusion on whether the measurement of the terminal in an RRC CONNECTED mode also needs to consider the LP-WUR.

### Introduction to LP-WURs of different architectures (types):

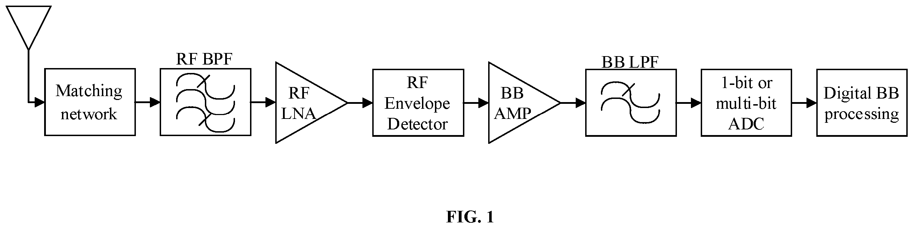

Exemplarily, FIG. 1 is a schematic diagram of an LP-WUR of a first architecture according to an exemplary embodiment of the present disclosure. As shown in FIG. 1, the LP-WUR of the first architecture is an LP-WUR based on Radio Frequency (RF) envelope detection, which directly converts the RF signal into a Base Band (BB) signal through an envelope detector. There is no Local Oscillator (LO) and Phase Locked Loop (PLL) in the receiver, which can achieve very low power consumption.

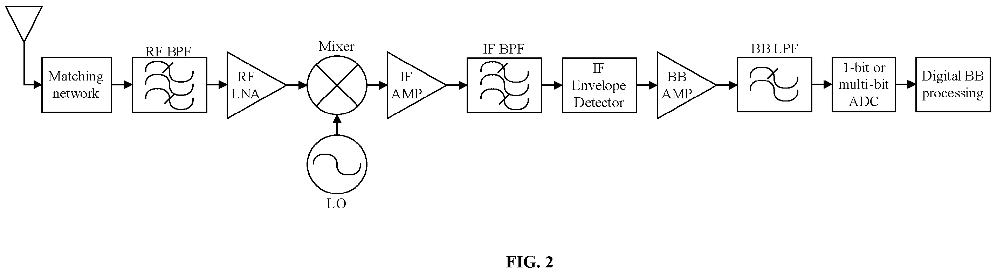

Exemplarily, FIG. 2 is a schematic diagram of an LP-WUR of a second architecture according to an exemplary embodiment of the present disclosure. As shown in FIG. 2, the LP-WUR of the second architecture is an LP-WUR based on a heterodyne architecture with IF envelope detection, which is equipped with a local oscillator (LO). The carrier generated by the LO can be mixed with the received RF signal to acquire an Intermediate Frequency (IF) signal, and then the IF signal is converted into a base band signal through an IF envelope detector. This receiver does not require high LO accuracy; thus, compared with conventional receivers, it can also reduce power consumption. In addition, a Frequency Locked Loop (FLL) can be used instead of the PLL for incoherent detection, which, although bringing a larger frequency offset error, can also reduce the power consumption.

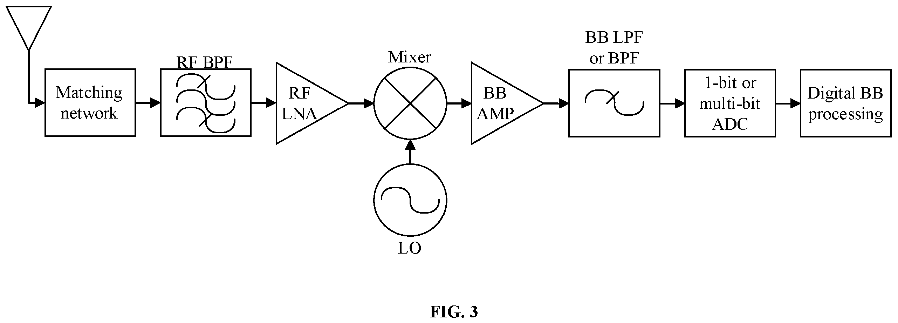

Exemplarily, FIG. 3 is a schematic diagram of an LP-WUR of a third architecture according to an exemplary embodiment of the present disclosure. As shown in FIG. 3, the LP-WUR of the third architecture is an LP-WUR based on a homodyne/zero-IF architecture with baseband envelope detection, which is equipped with a LO. The carrier generated by the LO is mixed with the received RF signal to acquire a base band signal, and the envelope detection is performed on the base band signal. The appropriate LO is selected and the PLL is replaced with the FLL, which can achieve the energy-saving effect to a certain extent.

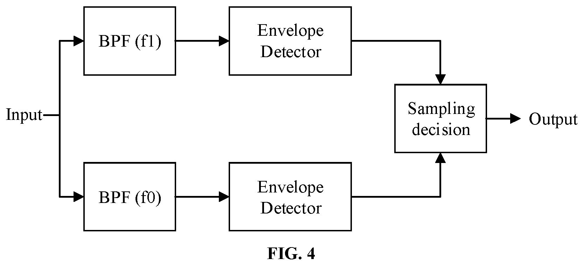

Exemplarily, FIG. 4 is a schematic diagram of an LP-WUR of a fourth architecture according to an exemplary embodiment of the present disclosure. As shown in FIG. 4, the LP-WUR of the fourth architecture is an LP-WUR based on a Frequency-Shift Keying (FSK) receiver with parallel binary On-Off Keying (OOK) receivers and a comparator circuit. The FSK receiver can be implemented, for example, by the OOK receivers at two frequency points and the comparator as shown in FIG. 4.

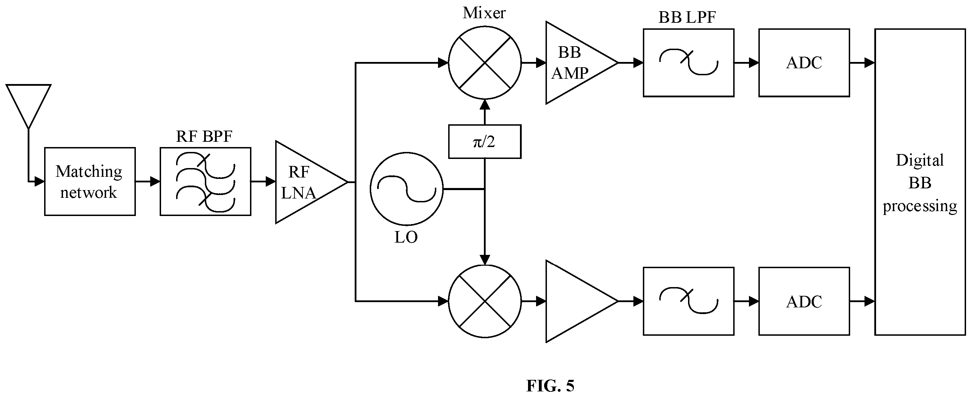

Exemplarily, FIG. 5 is a schematic diagram of an LP-WUR of a fifth architecture according to an exemplary embodiment of the present disclosure. As shown in FIG. 5, the LP-WUR of the fifth architecture is an LP-WUR based on OFDMA-based signal/channel detection. Compared with the conventional receiver, it may not require a Fast Fourier Transform (FFT), and thus can reduce the power consumption.

### Introduction to switching between MR and LP-WUR:

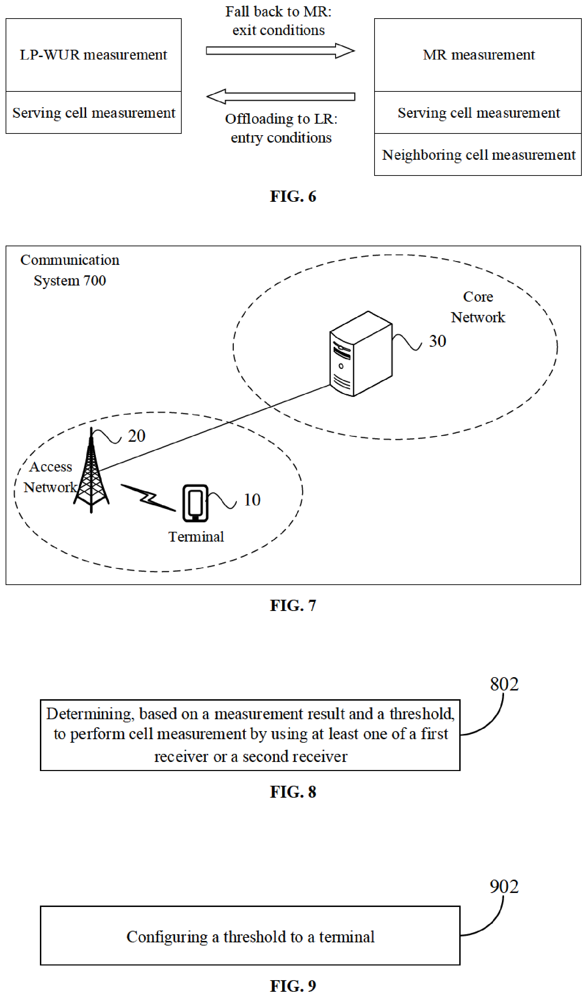

In some embodiments, the terminal performs the switching between the MR and the LP-WUR based on a set condition. For example, a measurement result of the MR and a measurement result of the LP-WUR are compared with a threshold, to switch between the measurement by the MR and the measurement by the LP-WUR. FIG. 6 is a schematic diagram of a process of switching a receiver according to an exemplary embodiment of the present disclosure. As shown in FIG. 6:

For offloading from the MR to the LP-WUR (corresponding to entry conditions):
- The condition for entering the LP-WUR at least needs to include that the quality of the serving cell is good, such as higher than a certain threshold. It should be noted that the quality of the serving cell herein may be acquired through the measurement by the LP-WUR and/or the MR.
- When the condition is satisfied, the MR is turned off, and only the LP-WUR is used to measure the serving cell. The state of entering the LP-WUR can be determined based on the measurement result of the MR, and the conventional Radio Resource Management (RRM) measurement accuracy can be achieved. Therefore, the triggering of this process is typically accurate and requires no additional enhancement.

For fall back from the LP-WUR to the MR (corresponding to exit conditions):
- The condition of leaving the LP-WUR at least needs to satisfy leaving coverage range of an LP signal, for example, the signal quality of the serving cell measured by the LP-WUR is lower than a certain threshold. It should be noted that, for the signal quality of the serving cell, only the measurement result of the LP-WUR is considered.

### Introduction to cell selection/reselection conditions of the terminal:

For a normal terminal (non-RedCap terminal):
for an intra-frequency cell that has been detected but has not yet been reselected, the filtering shall enable the terminal to evaluate, in the case of T_{reselection}=0, whether the intra-frequency cell satisfies the defined reselection criteria within T_{evaluate,NR_Intra}, which has the following premise.

When rangeToBestCell is not configured:
the cell is at least 3 dB better in Frequency Range 1 (FR1), or at least 4.5 dB better in Frequency Range 2 (FR2).

When rangeToBestCell is configured:
among all of the detected cells whose cell ranking criterion R value is within the cell ranking criterion R value rangeToBestCell of the highest ranking cell, the cell has the highest number of beams above the threshold absThreshSS-BlocksConsolidation.

If there are multiple such cells, the cell has the highest level among them.

If the current serving cell is among them, the ranking of the cell is better by at least 3 dB in FR1, or better by 4.5 dB in FR2.

For the RedCap terminal:
for an intra-frequency cell that has been detected but has not yet been reselected, the filtering shall enable the terminal to evaluate, in the case of T_{reselection}=0, whether the intra-frequency cell satisfies the defined reselection criteria within T_{evaluate,NR_Intra_RedCap}, which has the following premise.

When rangeToBestCell is not configured:
for a RedCap terminal with 2 receive (Rx) antennas, the ranking of the cell is at least 3 dB better in FR1 or 4.5 dB better in FR2;
for a RedCap terminal with 1 Rx antenna, the ranking of the cell is at least 4 dB better in FR1.

When rangeToBestCell is configured:
among all of the detected cells whose cell ranking criterion R value is within the cell ranking criterion R value rangeToBestCell of the highest ranking cell, the cell has the highest number of beams above the threshold absThreshSS-BlocksConsolidation.

If there are multiple such cells, the cell has the highest level among them.

If the current serving cell is among the cells of the RedCap terminal with 2 Rx antennas, the ranking of the cell is at least 3 dB better in FR1 or 4.5 dB better in FR2.

If the current serving cell is among the cells of the RedCap terminal with 1 Rx antenna, the ranking of the cell is at least 4 dB better in FR1.

In combination with the above, it can be seen that, for the measurement of the RedCap terminal in the RRC IDLE mode/INACTIVE mode, the cell reselection criterias corresponding to the terminals with different Rx antenna configurations are also different. For example, the criterion for the 1 Rx is 1dB higher than the criterion for the 2 Rx.

As described above, there currently are many different types of LP-WURs, and the involved condition and the achieved accuracy when measuring the signals by different receivers are also different. If only a single RRM measurement index/measurement condition is used, it cannot be applied to all types of LP-WURs. The method provided in the embodiments of the present disclosure clarifies the measurement method based on the LP-WUR. Since different types of LP-WURs correspond to different performances, the corresponding differentiation processing may be performed. For the configuration of the threshold in the condition for switching between the LP-WUR and the MR, the type of LP-WUR is introduced, such that different receiver types can correspond to different thresholds (margins). In addition, for the threshold in the cell selection/reselection condition, the type of the LP-WUR is introduced. For the measurement accuracy index, the type of the LP-WUR is introduced.

FIG. 7 illustrates a schematic diagram of a system architecture of a communication system 700 according to an embodiment of the present disclosure. The system architecture may include: a terminal 10, an access network device 20, and a core network device 30.

The terminal 10 may refer to a User Equipment (UE), an access terminal, a subscriber unit, a subscriber station, a mobile station, a mobile site, a remote station, a remote terminal, a mobile device, a wireless communication device, a user agent, or a user device. Optionally, the terminal may be a cellular phone, a cordless phone, a Session Initiation Protocol (SIP) phone, a Wireless Local Loop (WLL) station, a Personal Digital Assistant (PDA), a handheld device with a wireless communication function, a computing device, or other processing device connected to a wireless modem, a vehicle-mounted device, a wearable device, a terminal in a 5th Generation System (5th Generation System, 5GS), or a terminal in a future evolved Public Land Mobile Network (PLMN), and the like, which is not limited in the embodiments of the present disclosure. For convenience of description, the aforementioned devices are collectively referred to as terminals.

It should be noted that there may be typically a plurality of terminals 10, and one or more terminals 10 may be distributed in a cell managed by each access network device 20. Furthermore, one or more terminals 10 may be distributed outside the cell managed by the access network device 20. Herein, communication between different terminals 10 may be performed on the basis of a sidelink.

The access network device 20 is a device deployed in an access network for providing a wireless communication function to the terminal 10. The access network device 20 may include various forms of macro base stations, micro base stations, relay stations, access points, and the like. In systems employing different wireless access technologies, the names of devices having access network device functions may be different, for example, in a 5G NR system, it is referred to as a gNodeB or gNB. With the evolution of communication technologies, the name "access network device" may change. For convenience of description, in the embodiments of the present disclosure, the aforementioned devices for providing the wireless communication function to the terminal 10 are collectively referred to as the access network device. Optionally, a communication relationship may be established between the terminal 10 and the core network device 30 through the access network device 20. Exemplarily, in a Long Term Evolution (LTE) system, the access network device 20 may be an Evolved Universal Terrestrial Radio Access Network (EUTRAN) or one or more eNodeBs in the EUTRAN; in a 5G NR system, the access network device 20 may be a RAN or one or more gNBs in the RAN.

The functions of the core network device 30 are mainly to provide user connection, management of users as well as service completion bearer, acting as a bearer network that provides an interface to external networks. For example, in the 5G NR system, the core network device may include devices such as an Access and Mobility Management Function (AMF) entity, a User Plane Function (UPF) entity, and a Session Management Function (SMF) entity. The access network device 20 and the core network device 30 may be collectively referred to as network devices.

In one example, the access network device 20 and the core network device 30 communicate with each other through a certain air technology, such as an NG interface in the 5G NR system. The access network device 20 and the terminal 10 communicate with each other through a certain air technology, such as a Uu interface. The terminals 10 communicate with each other through a certain air technology, such as a PC5 interface.

FIG. 8 is a flowchart of a cell measurement method according to an exemplary embodiment of the present disclosure. The method may be performed by a terminal. The method includes the following operation 802.

**At block 802,** the terminal determines, based on a measurement result and a threshold, to perform cell measurement by using at least one of a first receiver or a second receiver.

The measurement result includes at least one of a first measurement result or a second measurement result. Herein, the first measurement result is acquired through measurement by the first receiver, and the second measurement result is acquired through measurement by the second receiver. In some embodiments, the first measurement result and the second measurement result are measurement results for a serving cell of the terminal. In some embodiments, the first measurement result and the second measurement result are acquired by measuring a reference signal. In some embodiments, the terminal is in an RRC IDLE mode or an RRC INACTIVE mode.

The power consumption of the first receiver is higher than the power consumption of the second receiver, that is, the power consumption of performing the measurement by using the first receiver is higher than the power consumption of performing the measurement by using the second receiver.

In some embodiments, the first receiver is an MR, and the second receiver is an LP-WUR.

In some embodiments, the above threshold is configured by a network device. In some embodiments, the above threshold is determined based on information configured by the network device. In some embodiments, the above threshold is predefined in a protocol. In some embodiments, the above threshold is determined based on the information configured by the network device in combination with the information predefined in the protocol.

In some embodiments, the second measurement result corresponds to a plurality of thresholds, and the plurality of thresholds belong to the aforementioned threshold(s). When determining a receiver used for the cell measurement based on the second measurement result, the terminal determines a currently-used threshold from the plurality of thresholds, and further compares it with the second measurement result, thereby determining the receiver used for the cell measurement.

### For the case of offloading from the first receiver to the second receiver:

In some embodiments, the terminal is currently in a state of performing the cell measurement by using the first receiver. In some embodiments, during the process of performing the cell measurement by using the first receiver, the terminal may also perform the cell measurement by using the second receiver. In some embodiments, the offloading from the first receiver to the second receiver refers to the switching from the state of performing the cell measurement by using the first receiver to the state of performing the cell measurement only by using the second receiver. After the switching, the terminal may turn off the first receiver or enable the first receiver to enter the deep sleep state.

### • For the case of determination based on the first measurement result:

In some embodiments, when the first measurement result satisfies a first condition, the terminal determines to perform the cell measurement by using the second receiver, and/or turns off the first receiver. In such case, the terminal performs the cell measurement by using only the second receiver. In some embodiments, the first condition may be replaced with/equivalent to an entry condition for the measurement by using the second receiver. Turning off the first receiver may be replaced with/equivalent to enabling the first receiver to enter the deep sleep state.

The first condition includes the first measurement result being greater than or equal to a first threshold. Being greater than or equal to the first threshold includes at least one of the following: being greater than the first threshold, being equal to the first threshold, or being greater than or equal to the first threshold. In some embodiments, the first threshold is configured by the network device, e.g., configured by the network device through a System Information Block (SIB). In some embodiments, the first threshold is predefined in the protocol.

### • For the case of determination based on the first measurement result and the second measurement result:

In some embodiments, when the measurement result satisfies the first condition, the terminal determines to perform the cell measurement by using the second receiver, and/or turns off the first receiver. In such case, the terminal performs the cell measurement by using only the second receiver. In some embodiments, the first condition may be replaced with/equivalent to an entry condition for the measurement by using the second receiver. Turning off the first receiver may be replaced with/equivalent to enabling the first receiver to enter the deep sleep state.

The first condition includes at least one of the following: the first measurement result being greater than or equal to a second threshold; or, the second measurement result being greater than or equal to a third threshold. Herein, the third threshold belongs to the plurality of thresholds mentioned above. Being greater than or equal to the second threshold includes at least one of the following: being greater than the second threshold, being equal to the second threshold, or being greater than or equal to the second threshold. Being greater than or equal to the third threshold includes at least one of the following: being greater than the third threshold, being equal to the third threshold, or being greater than or equal to the third threshold.

Exemplarily, the first measurement result and the second measurement result are used to measure a Reference Signal Receiving Power (RSRP). The first measurement result is RSRP_MR, the second measurement result is RSRP_WUR, the second threshold is thr_RSRP_MR, and the third threshold is thr_RSRP_WUR. In the case of the determination based on RSRP_MR and RSRP_WUR, if RSRP_MR is greater than thr_RSRP_MR, the terminal enters a state of performing the cell measurement only based on the LP-WUR. Alternatively, if RSRP_MR is greater than thr_RSRP_MR and RSRP_WUR is greater than thr_RSRP_WUR, that is, when both conditions are satisfied simultaneously, the terminal enters the state of performing the cell measurement only based on the LP-WUR. Alternatively, if RSRP_MR is greater than thr_RSRP_MR or RSRP_WUR is greater than thr_RSRP_WUR, that is, when one of these two conditions is satisfied, the terminal enters the state of performing the cell measurement only based on the LP-WUR. Alternatively, if RSRP_WUR is greater than thr_RSRP_WUR, the terminal enters the state of performing the cell measurement only based on the LP-WUR. The value of thr_RSRP_WUR is set for the LP-WUR, and in some embodiments, the value of thr_RSRP_WUR may be individually configured or adjusted on the basis of thr_RSRP_MR, for specific details of which reference may be made to the relevant descriptions below.

In some embodiments, the second threshold is configured by the network device, e.g., configured by the network device through the SIB. In some embodiments, the second threshold is predefined in the protocol.

In some embodiments, the third threshold is determined by the terminal from a plurality of first preset thresholds based on at least one of the following: a type of the second receiver, a type of a measured reference signal, or a reception mode of the second receiver. In some embodiments, the type of the second receiver includes multiple receiver types among the receiver types shown in FIGS. 1 to 5, and may include other more types, which are not limited in the embodiments of the present disclosure. In some embodiments, the reference signal includes at least one of the following: a conventional synchronization signal (SS) or a low power-synchronization signal (LP-SS). In some embodiments, the reception mode includes at least one of the following: an Es/Iot (representing a signal-to-noise ratio) condition, the number of sampling times of the reference signal, or a synchronization condition of the terminal. The synchronization condition of the terminal refers to, for example, whether the terminal is synchronized with the network device corresponding to the measured cell. In some embodiments, the plurality of first preset thresholds are configured by the network device, e.g., configured by the network device through the SIB.

In some embodiments, the third threshold is determined by the terminal based on a sum of a second preset threshold and a first offset value. In some embodiments, the second preset threshold is configured by the network device, e.g., configured by the network device through the SIB. In some embodiments, the second preset threshold is the same as the second threshold described above. The first offset value is determined by the terminal from a plurality of first preset offset values based on at least one of the following: the type of the second receiver, the type of the measured reference signal, or the reception mode of the second receiver. In some embodiments, the configuration manner for the plurality of first preset offset values includes at least one of the following: being configured by the network device, e.g., configured by the network device through the SIB; being predefined in a protocol; or, being determined by the terminal.

In some embodiments, the terminal determines the first preset offset value corresponding to the second receiver of the first type, based on a difference between the measurement results for the same cell by the first receiver and the second receiver of the first type within the past preset duration range. Exemplarily, the terminal performs the cell measurement by using both the MR and the LP-WUR in a previous relatively long period of time, and finds that the measurement result (the average measurement result) for the same cell measured by the two receivers substantially satisfies RSRP_WUR-RSRP_MR = -3 dB; then, the terminal may set the first preset offset value corresponding to the LP-WUR of this type to be -3 dB.

### For the case of falling back from the second receiver to the first receiver:

In some embodiments, the terminal is currently in a state of performing the cell measurement by using only the second receiver. In some embodiments, falling back from the second receiver to the first receiver refers to the switching from the state of performing the cell measurement by using only the second receiver to the state of performing the cell measurement by using the first receiver. After the switching, the terminal may turn on the first receiver or wake up the first receiver from the deep sleep state. In some embodiments, during the process of performing the cell measurement by using the first receiver, the terminal may also perform the cell measurement by using the second receiver.

In some embodiments, when the second measurement result satisfies the second condition, the terminal determines to perform the cell measurement by using the first receiver. In some embodiments, the second condition may be replaced with/equivalent to an exit condition for the measurement by using the second receiver.

The second condition includes the second measurement result being less than or equal to a fourth threshold. The fourth threshold belongs to the aforementioned plurality of thresholds. Being less than or equal to the fourth threshold includes at least one of the following: being less than the fourth threshold; being equal to the fourth threshold; or being less than or equal to the fourth threshold.

In some embodiments, the fourth threshold is determined by the terminal from a plurality of third preset thresholds based on at least one of the following: the type of the second receiver, the type of the measured reference signal, or the reception mode of the second receiver. In some embodiments, the plurality of third preset thresholds are configured by the network device, e.g., configured by the network device through the SIB.

Exemplarily, the plurality of third preset thresholds configured by the network device may be represented as {thr1, thr2, thr3, thr4}. The terminal may determine the fourth threshold from the plurality of third preset thresholds based on its current situation from a plurality of situations, which include: situation 1, LP-WUR type 1+ Es/Iot > -6 dB; situation 2, LP-WUR type 1+ Es/Iot > -3 dB; situation 3: LP-WUR type 2+ Es/Iot > -6 dB; and situation 4, LP-WUR type 2+ Es/Iot > -3 dB.

In some embodiments, the fourth threshold is determined by the terminal based on a sum of a fourth preset threshold and a second offset value. In some embodiments, the fourth preset threshold is configured by the network device, e.g., configured by the network device through the SIB. The second offset value is determined by the terminal from a plurality of second preset offset values based on at least one of the following: the type of the second receiver, the type of a measured reference signal, or the reception mode of the second receiver. In some embodiments, a configuration manner for the plurality of second preset offset values includes at least one of the following: being configured by the network device, e.g., configured by the network device through the SIB; being predefined in the protocol; or, being determined by the terminal.

Exemplarily, the network device configures the threshold thr (the fourth preset threshold) through a certain SIB broadcast message; and on such basis, the terminal adjusts it by the offset value {Δ1, Δ2, Δ3} (the second preset offset value), so that the finally determined threshold may be {thr+Δ1, thr+Δ2, thr+Δ3} (the fourth threshold). It should be noted that, if the configuration manner for the second preset offset value is the same as that for the fourth preset threshold, which are the manner of being broadcast by the network device through the same or different SIB messages, the effect is the same as directly configuring the plurality of thresholds (the third preset thresholds), but there is a difference in signaling design. The network device may configure the threshold thr through the existing SIB and configure the offset value {Δ1, Δ2, Δ3} through the newly added SIB.

In some embodiments, the terminal determines the second preset offset value corresponding to the second receiver of the first type, based on the difference between the measurement results for the same cell by the first receiver and the second receiver of the first type within the past preset duration range.

It should be noted that, in addition to the contents described above, the first condition and the second condition may be further superimposed with other conditions, for example, superimposed with a low mobility condition and/or a not-at-cell-edge condition in the related technologies.

In some embodiments, for the terminal performing the measurement by using the second receiver, a measurement period of the second receiver is determined in at least one of the following manners: being determined based on a discontinuous reception (DRX) cycle of the terminal; being determined based on a cycle of a reference signal measured by the second receiver; being determined based on a measurement window corresponding to a reference signal configured for the second receiver by the network device; or, being determined based on the number of sampling times of the reference signal measured by the second receiver.

Exemplarily, when continuing to use a Synchronization Signal (SS) and a corresponding Synchronization Signal Block (SSB) Measurement Timing Configuration (SSB Measurement Timing Configuration (SMTC), DRX Configuration, etc., in the related technologies, the terminal determines the measurement period of the second receiver based on the DRX cycle. For example, every M1*N1 DRX cycles, the terminal needs to measure RSRP and Reference Signal Receiving Quality (RSRQ) results for the serving cell, and evaluate whether an S-criterion for the cell selection is satisfied. Here, the values of M1 and/or N1 in this case may be the same as or different from those in the related technologies. When the LP-WUR measures a new reference signal (e.g., an LP-SS), or when the SS in the related technologies continues to be used but the measurement window is not determined according to the SMTC or DRX configuration in the related technologies, the terminal determines the measurement period of the second receiver based on the cycle of the new reference signal, or determines the measurement period of the second receiver based on the cycle of the measurement window (e.g., a low power SSB measurement timing configuration (LP-SMTC)) configured by the network device for the measurement by the second receiver, or determines the measurement period of the second receiver based on the cycle of the new DRX (e.g., a low power discontinuous reception (LP-DRX)) configured by the network device for the measurement by the second receiver, or determines the measurement period of the second receiver based on the modified values of M1 and/or N1.

### For cell selection/reselection conditions:

In some embodiments, the terminal performs at least one of cell selection or cell reselection based on a measurement result difference and a fifth threshold. Herein, the measurement result difference is a difference between a third measurement result and a fourth measurement result, the third measurement result is acquired by measuring a serving cell of the terminal by the second receiver, and the fourth measurement result is acquired by measuring a neighboring cell of the serving cell of the terminal by the second receiver. Based on the measurement result difference and the fifth threshold, the terminal may determine whether to select/reselect to the neighboring cell. In some embodiments, the terminal performing the above processes is in the RRC IDLE mode or the RRC INACTIVE mode.

In some embodiments, the fifth threshold is determined from a plurality of fifth preset thresholds based on at least one of the following: the type of the second receiver, the type of the measured reference signal, or the reception mode of the second receiver. In some embodiments, the plurality of fifth preset thresholds are configured by the network device, e.g., configured by the network device through the SIB.

In some embodiments, the fifth threshold is determined by the terminal based on a sum of a sixth preset threshold and a third offset value. In some embodiments, the sixth preset threshold is configured by the network device, e.g., configured by the network device through the SIB. The third offset value is determined by the terminal from a plurality of third preset offset values based on at least one of the following: the type of the second receiver, the type of the measured reference signal, or the reception mode of the second receiver. In some embodiments, a configuration manner for the plurality of third preset offset values includes at least one of the following: being configured by the network device, e.g., configured by the network device through the SIB; being predefined in the protocol; or, being determined by the terminal.

In some embodiments, the terminal may determine an error range of the measurement by the receiver based on the measurement result for the same cell by the receiver within the past preset duration range. The terminal may determine the third preset offset value corresponding to the second receiver of the first type based on the error range of the second receiver of the first type. In some embodiments, the error range may be equivalent to/replaced with a fluctuation range, or an ambiguity range. For example, the measurement result measured by the first receiver is typically relatively accurate, and the measurement result for the same cell remains basically unchanged (e.g., -10 dB) within a preset duration range. However, the measurement result of the second receiver has certain uncertainty, and the fluctuation range of the measurement result for the same cell by the second receiver within the preset duration range is [-20 dB to -25 dB], so the error range is 5 dB; and accordingly, based on the error range, the third preset offset value corresponding to the second receiver of the first type can be determined to be 5 dB.

In some embodiments, the neighboring cell of the serving cell of the terminal includes at least one of the following: an intra-frequency neighboring cell of the serving cell, or an inter-frequency neighboring cell of the serving cell.

In some embodiments, for the second receiver of the same type, or the measurement by the second receiver in the same situation (consisting of at least one of the following: the type of the second receiver, the type of the measured reference signal, or the reception mode of the second receiver), the fifth threshold for the intra-frequency neighboring cell and the fifth threshold for the inter-frequency neighboring cell are the same. For example, both are acquired by adding 3 dB based on the corresponding threshold in the related technologies. In some embodiments, for the second receiver of the same type, or the measurement by the second receiver in the same situation, the fifth threshold for the intra-frequency neighboring cell is different from the fifth threshold for the inter-frequency neighboring cell. For example, the one for the intra-frequency neighboring cell is acquired by adding 3 dB based on the corresponding threshold in the related technologies; and the one for the inter-frequency neighboring cell is acquired by adding 4 dB based on the corresponding threshold in the related technologies.

### For measurement accuracy/measurement delay:

In the related technologies, the RRM measurement in the RRC CONNECTED mode has the corresponding accuracy requirement, while for most RRM measurements in the RRC IDLE mode/RRC INACTIVE mode, there is no measurement result to be reported, and thus there is no accuracy requirement, except for Positioning Reference Signal (PRS) measurement and Early Measurement Report (EMR) measurement that are related to positioning. For the PRS measurement, the measurement result may be reported through Small Data Transmission (SDT), or the measurement result may be reported after entering the RRC CONNECTED mode. The EMR measurement is performed in advance in the RRC IDLE mode/RRC INACTIVE mode, and the result is reported after entering the RRC CONNECTED mode.

In some embodiments, the terminal reports, to the network device, a measurement type of the measurement by the second receiver. Herein, the measurement type is used to determine at least one of the following: a delay requirement of the measurement result measured by the second receiver or an accuracy requirement of the measurement result measured by the second receiver, e.g., determined by the network device. In some embodiments, the measurement type may be equivalent to/replaced with a measurement situation. In some embodiments, the terminal reporting the measurement type supports at least one of preforming the measurement by using the second receiver or preforming the EMR measurement by using the second receiver in the RRC CONNECTED mode.

In some embodiments, the measurement type includes at least one of the following: a type of the second receiver; a signal-to-noise ratio (Es/Iot) during the measurement by the second receiver; the number of sampling times during the measurement by the second receiver; or a type of the reference signal measured by the second receiver.

In some embodiments, the above measurement type is carried in the user capability reported by the terminal. For example, as the terminal capability reported to the network device, that is, the information with a per-terminal (per-UE) granularity, the reported information is applicable to all measurement results of the terminal based on the second receiver. In some embodiments, the aforementioned measurement type is carried in additional information of the measurement result of the second receiver reported by the terminal, and the measurement type is reported for the measurement result of the second receiver. For example, the measurement type of the second receiver is reported to the network device as the additional information when the measurement result is reported, that is, the information with a per-measurement result (per measurement result) granularity, the reported information is only applicable to the corresponding measurement result, and different measurement results may correspond to different measurement types.

In some embodiments, for different measurement types of the second receiver, the corresponding different delay requirements and/or accuracy requirements may be formulated in the protocol. For example, in the case of the LP-WUR type 1, the measurement period is calculated based on 3 times of sampling, and when Es/Iot> -3 dB, the corresponding measurement accuracy is +/-3 dB. In the case of the LP-WUR type 2, the measurement period is calculated based on 1 time of sampling, and when Es/Iot> -6 dB, the corresponding measurement accuracy is +/-3 dB. It should be noted that the above values (including the number of sampling times, Es/Iot and the value of the accuracy requirement) are all examples, and are only used to illustrate that the measurement period, the accuracy requirement, and the like may be different under different circumstances, which are not intended to limit the embodiments of the present disclosure.

In summary, in the method provided in the embodiments, by determining the receiver to be used for the cell measurement based on the measurement result and the threshold, it is clarified that the implementation of the cell measurement of the terminal when the second receiver with low power consumption is involved. By setting the plurality of thresholds, the corresponding threshold(s) can be selected based on the type of the second receiver to determine the receiver to be used for the cell measurement, thereby avoiding overperformance or underperformance caused by adopting the same performance index for different types of second receivers.

In the method provided in the embodiments, by providing the first threshold, the implementation of determining the receiver used for the cell measurement based on the first measurement result is clarified, thereby clarifying the implementation of the cell measurement of the terminal. By providing the second threshold and the third threshold, the implementation of determining the receiver used for the cell measurement based on the first measurement result and the second measurement result is also clarified, thereby clarifying the implementation of the cell measurement of the terminal. By providing the plurality of first preset thresholds, the operation of determining the third threshold of the first condition based on the type of the second receiver is realized, and the operation of setting thresholds respectively for the receivers of different performances is also realized. By providing the second preset threshold and the plurality of first preset offset values, the operation of determining the third threshold of the first condition based on the type of the second receiver is realized, and the operation of setting thresholds respectively for the receivers of different performances is also realized. By providing the plurality of third preset thresholds, the operation of determining the fourth threshold of the second condition based on the measurement situation is realized, and the operation of setting thresholds respectively for different measurement situations is also realized. By providing the fourth preset threshold and the plurality of second preset offset values, the operation of determining the fourth threshold of the second condition based on the measurement situation is realized, and the operation of setting thresholds respectively for different measurement situations is also realized. The measurement period of the second receiver is determined through the configuration related to the terminal and the reference signal, and the determination manner for the measurement period of the second receiver is clarified.

In the method provided in the embodiments, it is also clarified the implementation of the cell selection and/or reselection of the terminal in the case of involving the measurement by the second receiver with low power consumption, by performing the cell selection and/or reselection based on the measurement result difference and the preset threshold. By providing the plurality of fifth preset thresholds, the operation of determining the fifth threshold for the cell selection and/or reselection based on the measurement situation of the measurement by the second receiver is realized, and the operation of setting the thresholds for the cell selection and/or reselection respectively for different measurement situations is also realized. By providing the sixth preset threshold and the plurality of third preset offset values, the operation of determining the fifth threshold for the cell selection and/or reselection based on the measurement situation of the second receiver is realized, and the operation of setting the thresholds for the cell selection and/or reselection respectively for different measurement situations is also realized.

In the method provided in the embodiments, by reporting the measurement type of the measurement by the second receiver, the delay requirement and/or the accuracy requirement of the measurement by the second receiver can be determined. This clarifies the determination manner for the requirement for the measurement result when the measurement is performed by the terminal with the low power consumption. The measurement type is reported by the means of the user capability, which provides a way of reporting the measurement type with the per-terminal granularity. In addition, the measurement type is reported by the means of the additional information, which provides a way to report the measurement type with the per-measurement result granularity.

FIG. 9 is a flowchart of a threshold configuration method according to an exemplary embodiment of the present disclosure. The method may be performed by a network device. The method includes the following operation 902.

**At block 902**, the network device configures a threshold to a terminal.

The threshold configured to the terminal is used for the terminal to determine, based on a measurement result and the threshold, to perform cell measurement by using at least one of a first receiver or a second receiver. The measurement result includes at least one of a first measurement result or a second measurement result. Herein, the first measurement result is acquired through measurement by the first receiver, and the second measurement result is acquired through measurement by the second receiver. The power consumption of the first receiver is higher than the power consumption of the second receiver, that is, the power consumption of performing the measurement by using the first receiver is higher than the power consumption of performing the measurement by using the second receiver. In some embodiments, the first receiver is an MR, and the second receiver is an LP-WUR.

In some embodiments, the threshold configured by the network device to the terminal is used for determining a plurality of thresholds corresponding to the second measurement result. When determining a receiver used for the cell measurement based on the second measurement result, the terminal determines a currently-used threshold from the plurality of thresholds, and compares further it with the second measurement result, thereby determining the receiver used for the cell measurement.

In some embodiments, the network device configures the first threshold to the terminal, e.g., configuring the first threshold through a SIB. The first threshold is used to be compared with the first measurement result, such that the terminal can determine to perform the cell measurement by using the second receiver, and/or, turn off the first receiver.

In some embodiments, the network device configures the second threshold to the terminal, e.g., configuring the second threshold through the SIB. In some embodiments, the network device configures a plurality of first preset thresholds to the terminal, e.g., configuring the first preset thresholds through the SIB. In some embodiments, the network device configures the second preset threshold to the terminal, e.g., configuring the second preset threshold through the SIB. Herein, the plurality of first preset thresholds are used for the terminal to determine a third threshold based on at least one of the following: a type of the second receiver, a type of a measured reference signal, or a reception mode of the second receiver; and the second preset threshold is used for the terminal to determine the third threshold based on a sum of the second preset threshold and a first offset value. Thereby, the terminal can compare the second threshold with the first measurement result, and/or compare the third threshold with the second measurement result, such that the terminal can determine to perform the cell measurement by using the second receiver, and/or turn off the first receiver. In some embodiments, the first offset value is determined by the terminal from a plurality of first preset offset values based on at least one of the following: the type of the second receiver, the type of the measured reference signal, or the reception mode of the second receiver. In some embodiments, the configuration manner for the plurality of first preset offset values includes at least one of the following: being configured by the network device, e.g., configured by the network device through the SIB; being predefined in a protocol; or, being determined by the terminal.

In some embodiments, the network device configures a plurality of third preset thresholds to the terminal, e.g., configuring the third preset thresholds through the SIB. In some embodiments, the network device configures a fourth preset threshold to the terminal, e.g., configuring fourth preset threshold through the SIB. Herein, the plurality of third preset thresholds are used for the terminal to determine the fourth threshold based on at least one of the following: the type of the second receiver, the type of the measured reference signal, or the reception mode of the second receiver. The fourth preset threshold is used for the terminal to determine the fourth threshold based on a sum of the fourth preset threshold and a second offset value. Thereby, the terminal can compare the fourth threshold with the second measurement result, such that the terminal can determine to perform the cell measurement by using the first receiver. In some embodiments, the second offset value is determined by the terminal from a plurality of second preset offset values based on at least one of the following: the type of the second receiver, the type of the measured reference signal, or the reception mode of the second receiver. In some embodiments, the configuration manner for the plurality of second preset offset values includes at least one of the following: being configured by the network device, e.g., configured by the network device through the SIB; being predefined in the protocol; or, being determined by the terminal.

It should be noted that, for the implementation process of the terminal determining to perform the cell measurement by using the receiver based on the measurement result and the corresponding threshold, reference may be made to the relevant description in the foregoing embodiments, and details are not described herein again in the embodiments of the present disclosure.

In some embodiments, the network device configures a plurality of fifth preset thresholds to the terminal, e.g., configuring the fifth preset thresholds through the SIB. Herein, the plurality of fifth preset thresholds are used for the terminal to determine the fifth threshold based on at least one of the following: the type of the second receiver, the type of the measured reference signal, or the reception mode of the second receiver. In some embodiments, the network device configures the sixth preset threshold to the terminal, e.g., configuring the sixth preset threshold through the SIB. Herein, the sixth preset threshold is used for the terminal to determine the fifth threshold based on a sum of the sixth preset threshold and a third offset value. Thereby, the terminal can compare the fifth threshold with a measurement result difference, such that the terminal can perform at least one of the cell selection or cell reselection. The measurement result difference is a difference between a third measurement result and a fourth measurement result, the third measurement result is acquired by measuring a serving cell of the terminal by the second receiver; and the fourth measurement result is acquired by measuring a neighboring cell of the serving cell of the terminal by the second receiver.

In some embodiments, the third offset value is determined by the terminal from a plurality of third preset offset values based on at least one of the following: the type of the second receiver, the type of the measured reference signal, or the reception mode of the second receiver. In some embodiments, a configuration manner for the plurality of third preset offset values includes at least one of the following: being configured by the network device, e.g., configured by the network device through the SIB; being predefined in the protocol; or, being determined by the terminal.

It should be noted that, for the implementation process of the terminal performing the cell selection and/or reselection based on the measurement result difference and the corresponding threshold, reference may be made to the relevant description in the foregoing embodiments, and details are not described herein again in the embodiments of the present disclosure.

In some embodiments, the network device may also receive the measurement type of the measurement by the second receiver that is reported by the terminal. Herein, the measurement type is used to determine at least one of the following: a delay requirement of the measurement result measured by the second receiver or an accuracy requirement of the measurement result measured by the second receiver, e.g., determined by the network device. In some embodiments, the measurement type may be equivalent to/replaced with a measurement situation. In some embodiments, the terminal reporting the measurement type supports at least one of preforming the measurement by using the second receiver or preforming the EMR measurement by using the second receiver in the RRC CONNECTED mode.

In some embodiments, the measurement type includes at least one of the following: a type of the second receiver; a signal-to-noise ratio during the measurement by the second receiver; the number of sampling times during the measurement by the second receiver; or the type of the reference signal measured by the second receiver. In some embodiments, the above measurement type is carried in the user capability reported by the terminal. In some embodiments, the aforementioned measurement type is carried in additional information of the measurement result of the second receiver reported by the terminal, and the measurement type is reported for the measurement result of the second receiver.

In summary, in the method provided in the embodiments, by configuring the threshold(s) to the terminal, it is clarified that the implementation of the cell measurement of the terminal when the second receiver with low power consumption is involved. By setting the plurality of thresholds, the corresponding threshold(s) can be selected based on the type of the second receiver to determine the receiver to be used for the cell measurement, thereby avoiding overperformance or underperformance caused by adopting the same performance index for different types of second receivers.

In the method provided in the embodiments, by configuring the first threshold, the implementation of determining the receiver used for the cell measurement based on the first measurement result is clarified, thereby clarifying the implementation of the cell measurement of the terminal. By configuring the second threshold and the third threshold, the implementation of determining the receiver used for the cell measurement based on the first measurement result and the second measurement result is clarified, thereby clarifying the implementation of the cell measurement of the terminal. By configuring the plurality of first preset thresholds, the operation of determining the third threshold of the first condition based on the type of the second receiver is realized, and the operation of setting the thresholds separately set for the receivers of different performances is also realized. By configuring the second preset threshold and the plurality of first preset offset values, the operation of determining the third threshold of the first condition based on the type of the second receiver is realized, and the operation of setting thresholds respectively for the receivers of different performances is also realized. By configuring the plurality of third preset thresholds, the operation of determining the fourth threshold of the second condition based on the measurement situation is realized, and the operation of setting thresholds respectively for different measurement situations is also realized. By configuring the fourth preset threshold and the plurality of second preset offset values, the operation of determining the fourth threshold of the second condition based on the measurement situation is realized, and the operation of setting thresholds respectively for different measurement situations is also realized.

In the method provided in the embodiments, it is also clarified the implementation of the cell selection and/or reselection of the terminal in the case of involving the measurement by the second receiver with low power consumption, by performing the cell selection and/or reselection based on the measurement result difference and the preset threshold. By configuring the plurality of fifth preset thresholds, the operation of determining the fifth threshold for the cell selection and/or reselection based on the measurement situation of the measurement by the second receiver is realized, and t the operation of setting the thresholds for the cell selection and/or reselection respectively for different measurement situations is also realized. By configuring the sixth preset threshold and the plurality of third preset offset values, the operation of determining the fifth threshold for the cell selection and/or reselection based on the measurement situation of the second receiver is realized, and the operation of setting the thresholds for the cell selection and/or reselection respectively for different measurement situations is also realized.

In the method provided in the embodiments, the delay requirement and/or the accuracy requirement of the measurement by the second receiver can be determined by reporting the measurement type of the measurement by the second receiver. This clarifies the determination manner for the requirement for the measurement result when the measurement is performed by the terminal with the low power consumption. The measurement type is reported by the means of the user capability, which provides a way of reporting the measurement type with the per-terminal granularity. In addition, the measurement type is reported by the means of the additional information, which provides a manner to report the measurement type with the per-measurement result granularity.

In the method provided in the present disclosure: (1) it clarifies the first condition for entering the cell measurement by using the second receiver with low power consumption and the second condition for exiting the cell measurement by using the second receiver with low power consumption. Furthermore, since the second condition is determined based on the measurement result of the second receiver, and the measurement results (performances) of different types of second receivers differ greatly, different conditions (thresholds) are introduced to ensure that the terminal can timely fall back to an accurate measurement state by using the first receiver with higher power consumption. (2) In a case where the second receiver with low power consumption supports measuring the serving cell and the neighboring cell, and the measurement result of the second receiver is available for the cell selection and/or reselection, the threshold in the cell selection/reselection condition is adjusted based on the type of the second receiver. (3) In a case of considering the accuracy requirement and/or delay requirement for the measurement by the second receiver with low power consumption, by formulating the accuracy requirements and/or delay requirements for multiple sets of measurements in conjunction with the reported measurement type of the measurement by the second receiver, the accuracy requirement and/or delay requirement for the corresponding measurement by the second receiver can be determined.

### For the aforementioned contents of Part (1):

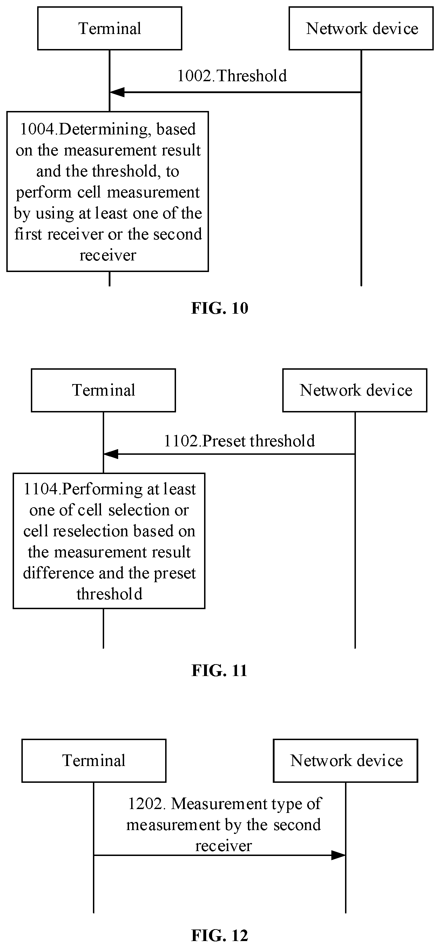

FIG. 10 is a flowchart of a cell measurement method according to an exemplary embodiment of the present disclosure. The method can be used in the system shown in FIG. 7, and the method includes the following operations 1002 and 1004.

**At block 1002,** the network device configures the threshold to the terminal.

The threshold configured to the terminal is used for the terminal to determine, based on the measurement result and the threshold, to perform cell measurement by using at least one of a first receiver or a second receiver. The measurement result includes at least one of a first measurement result or a second measurement result. Herein, the first measurement result is acquired through measurement by the first receiver, and the second measurement result is acquired through measurement by the second receiver. In some embodiments, the first measurement result and the second measurement result are measurement results for the serving cell of the terminal. In some embodiments, the first measurement result and the second measurement result are acquired by measuring the reference signal. In some embodiments, the terminal is in the RRC IDLE mode or the RRC INACTIVE mode.

The power consumption of the first receiver is higher than the power consumption of the second receiver, that is, the power consumption of performing the measurement by using the first receiver is higher than the power consumption of performing the measurement by using the second receiver. In some embodiments, the first receiver is an MR, and the second receiver is an LP-WUR.

In some embodiments, the second measurement result corresponds to a plurality of thresholds, and the plurality of thresholds are determined based on the threshold configured to the terminal. When determining a receiver used for the cell measurement based on the second measurement result, the terminal determines a currently-used threshold from the plurality of thresholds, and further compares it with the second measurement result, thereby determining the receiver used for the cell measurement.

**At block 1004,** the terminal determines, based on the measurement result and the threshold, to perform the cell measurement by using at least one of the first receiver or the second receiver.

### For the case of offloading from the first receiver to the second receiver:

In some embodiments, the terminal is currently in a state of performing the cell measurement by using the first receiver. In some embodiments, during the process of performing the cell measurement by using the first receiver, the terminal may also perform the cell measurement by using the second receiver. In some embodiments, the offloading from the first receiver to the second receiver refers to the switching from the state of performing the cell measurement by using the first receiver to the state of performing the cell measurement by using only the second receiver. After the switching, the terminal may turn off the first receiver or enable the first receiver to enter the deep sleep state.

### • For the case of determination based on the first measurement result:

In some embodiments, when the first measurement result satisfies a first condition, the terminal determines to perform the cell measurement by using the second receiver, and/or turns off the first receiver. In such case, the terminal performs the cell measurement by using only the second receiver. In some embodiments, the first condition may be replaced with/equivalent to an entry condition for the measurement by using the second receiver. Turning off the first receiver may be replaced with/equivalent to enabling the first receiver to enter the deep sleep state.

The first condition includes the first measurement result being greater than or equal to a first threshold. Being greater than or equal to the first threshold includes at least one of the following: being greater than the first threshold, being equal to the first threshold, or being greater than or equal to the first threshold. In some embodiments, the first threshold is configured by the network device, e.g., configured by the network device through the SIB. In some embodiments, the first threshold is predefined in the protocol.

### • For the case of determination based on the first measurement result and the second measurement result:

In some embodiments, when the measurement result satisfies the first condition, the terminal determines to perform the cell measurement by using the second receiver, and/or turns off the first receiver. In such case, the terminal performs the cell measurement by using only the second receiver. In some embodiments, the first condition may be replaced with/equivalent to an entry condition for the measurement by using the second receiver. Turning off the first receiver may be replaced with/equivalent to enabling the first receiver to enter the deep sleep state.

The first condition includes at least one of the following: the first measurement result being greater than or equal to a second threshold; or, the second measurement result being greater than or equal to a third threshold. Herein, the third threshold belongs to the plurality of thresholds mentioned above. Being greater than or equal to the second threshold includes at least one of the following: being greater than the second threshold, being equal to the second threshold, or being greater than or equal to the second threshold. Being greater than or equal to the third threshold includes at least one of the following: being greater than the third threshold, being equal to the third threshold, or being greater than or equal to the third threshold.

In some embodiments, the second threshold is configured by the network device, e.g., configured by the network device through the SIB. In some embodiments, the second threshold is predefined in the protocol.

In some embodiments, the third threshold is determined by the terminal from a plurality of first preset thresholds based on at least one of the following: a type of the second receiver, a type of a measured reference signal, or a reception mode of the second receiver. In some embodiments, the type of the second receiver includes multiple receiver types among the receiver types shown in FIGS. 1 to 5, and may include other more types, which are not limited in the embodiments of the present disclosure. In some embodiments, the reference signal includes at least one of the following: a conventional synchronization signal (SS) or a low power-synchronization signal (LP-SS). In some embodiments, the reception mode includes at least one of the following: an Es/Iot (representing a signal-to-noise ratio) condition, the number of sampling times of the reference signal, or a synchronization condition of the terminal. The synchronization condition of the terminal refers to, for example, whether the terminal is synchronized with the network device corresponding to the measured cell. In some embodiments, the plurality of first preset thresholds are configured by the network device, e.g., configured by the network device through the SIB.

In some embodiments, the third threshold is determined by the terminal based on a sum of a second preset threshold and a first offset value. In some embodiments, the second preset threshold is configured by the network device, e.g., configured by the network device through the SIB. In some embodiments, the second preset threshold is the same as the second threshold described above. The first offset value is determined by the terminal from a plurality of first preset offset values based on at least one of the following: the type of the second receiver, the type of the measured reference signal, or the reception mode of the second receiver. In some embodiments, the configuration manner for the plurality of first preset offset values includes at least one of the following: being configured by the network device, e.g., configured by the network device through the SIB; being predefined in the protocol; or, being determined by the terminal.

In some embodiments, the terminal determines the first preset offset value corresponding to the second receiver of the first type, based on a difference between the measurement results for the same cell by the first receiver and the second receiver of the first type within the past preset duration range.

### For the case of falling back from the second receiver to the first receiver:

In some embodiments, the terminal is currently in a state of performing the cell measurement by using only the second receiver. In some embodiments, falling back from the second receiver to the first receiver refers to the switching from the state of performing the cell measurement only by using the second receiver to the state of performing the cell measurement by using the first receiver. After the switching, the terminal may turn on the first receiver or wake up the first receiver from the deep sleep state. In some embodiments, during the process of performing the cell measurement by using the first receiver, the terminal may also perform the cell measurement by using the second receiver.

In some embodiments, when the second measurement result satisfies the second condition, the terminal determines to perform the cell measurement by using the first receiver. In some embodiments, the second condition may be replaced with/equivalent to an exit condition for the measurement by using the second receiver.

The second condition includes the second measurement result being less than or equal to a fourth threshold. The fourth threshold belongs to the aforementioned plurality of thresholds. Being less than or equal to the fourth threshold includes at least one of the following: being less than the fourth threshold; being equal to the fourth threshold; or being less than or equal to the fourth threshold.

In some embodiments, the fourth threshold is determined by the terminal from a plurality of third preset thresholds based on at least one of the following: the type of the second receiver, the type of the measured reference signal, or the reception mode of the second receiver. In some embodiments, the plurality of third preset thresholds are configured by the network device, e.g., configured by the network device through the SIB.

In some embodiments, the fourth threshold is determined by the terminal based on a sum of a fourth preset threshold and a second offset value. In some embodiments, the fourth preset threshold is configured by the network device, e.g., configured by the network device through the SIB. The second offset value is determined by the terminal from a plurality of second preset offset values based on at least one of the following: the type of the second receiver, the type of the measured reference signal, or the reception mode of the second receiver. In some embodiments, a configuration manner for the plurality of second preset offset values includes at least one of the following: being configured by the network device, e.g., configured by the network device through the SIB; being predefined in the protocol; or, being determined by the terminal.

In some embodiments, the terminal determines the second preset offset value corresponding to the second receiver of the first type, based on the difference between the measurement results for the same cell by the first receiver and the second receiver of the first type within the past preset duration range.

In some embodiments, for the terminal performing measurement by using the second receiver, a measurement period of the second receiver is determined in at least one of the following manners: being determined based on a discontinuous reception (DRX) cycle of the terminal; being determined based on a cycle of a reference signal measured by the second receiver; being determined based on a measurement window corresponding to a reference signal configured for the second receiver by the network device; or, being determined based on the number of sampling times of the reference signal measured by the second receiver.

In the embodiments, the operations of 1002 and 1004 are optional; and in different embodiments, one or more of such operations may be omitted or replaced.

The operation of 1002 may be implemented as an independent embodiment, for example, a separate implementation as the threshold configuration method on the network device side. The operation of 1004 may be implemented as an independent embodiment, for example, a separate implementation as the cell measurement method on the terminal side.

In summary, in the method provided in the embodiments, by determining the receiver to be used for the cell measurement based on the measurement result and the threshold, it is clear that the implementation of the cell measurement of the terminal when the second receiver with low power consumption is involved. By setting the plurality of thresholds, the corresponding threshold(s) can be selected based on the type of the second receiver to determine the receiver to be used for the cell measurement, thereby avoiding overperformance or underperformance caused by adopting the same performance index for different types of second receivers.

In the method provided in the embodiments, by providing the first threshold, the implementation of determining the receiver used for the cell measurement based on the first measurement result is clarified, thereby clarifying the implementation of the cell measurement of the terminal. By providing the second threshold and the third threshold, the implementation of determining the receiver used for the cell measurement based on the first measurement result and the second measurement result is also clarified, thereby clarifying the implementation of the cell measurement of the terminal. By providing the plurality of first preset thresholds, the operation of determining the third threshold of the first condition based on the type of the second receiver is realized, and the operation of setting thresholds respectively for the receivers of different performances is also realized. By providing the second preset threshold and the plurality of first preset offset values, the operation of determining the third threshold of the first condition based on the type of the second receiver is realized, and the operation of setting thresholds respectively for the receivers of different performances is also realized. By providing the plurality of third preset thresholds, the operation of determining the fourth threshold of the second condition based on the measurement situation is realized, and the operation of setting thresholds respectively for different measurement situations is also realized. By providing the fourth preset threshold and the plurality of second preset offset values, the operation of determining the fourth threshold of the second condition based on the measurement situation is realized, and the operation of setting thresholds respectively for different measurement situations is also realized. The measurement period of the second receiver is determined through the configuration related to the terminal and the reference signal, and the determination manner for the measurement period of the second receiver is clarified.

### For the aforementioned contents of Part (2):

FIG. 11 is a flowchart of a cell selection method according to an exemplary embodiment of the present disclosure. The method can be used in the system shown in FIG. 7, and the method includes the following operations 1102 and 1104.

**At block 1102,** the network device configures the preset threshold to the terminal.

In some embodiments, the network device configures a plurality of fifth preset thresholds to the terminal. Herein, the plurality of fifth preset thresholds are used for the terminal to determine the fifth threshold based on at least one of the following: the type of the second receiver, the type of the measured reference signal, or the reception mode of the second receiver.

In some embodiments, the network device configures the sixth preset threshold to the terminal. Herein, the sixth preset threshold is used for the terminal to determine the fifth threshold based on the sum of the sixth preset threshold and the third offset value. The third offset value is determined by the terminal from the plurality of third preset offset values based on at least one of the following: the type of the second receiver, the type of the measured reference signal, or the reception mode of the second receiver.

**At block 1104,** the terminal performs at least one of the cell selection or cell reselection based on the measurement result difference and the preset threshold.

In some embodiments, the terminal performs at least one of the cell selection or cell reselection based on the measurement result difference and the fifth threshold. Herein, the measurement result difference is the difference between the third measurement result and the fourth measurement result, the third measurement result is acquired by measuring the serving cell of the terminal by the second receiver; and the fourth measurement result is acquired by measuring the neighboring cell of the serving cell of the terminal by the second receiver. Based on the measurement result difference and the fifth threshold, the terminal may determine whether to select/reselect to the neighboring cell. In some embodiments, the terminal performing the above processes is in the RRC IDLE mode or the RRC INACTIVE mode.

In some embodiments, the fifth threshold is determined from a plurality of fifth preset thresholds based on at least one of the following: the type of the second receiver, the type of a measured reference signal, or the reception mode of the second receiver. In some embodiments, the plurality of fifth preset thresholds are configured by the network device, e.g., configured by the network device through the SIB. In some embodiments, the reference signal includes a synchronization signal (SS). In some embodiments, the reception mode includes at least one of the following: an Es/Iot (representing a signal-to-noise ratio) condition, the number of sampling times of the reference signal, or a synchronization condition of the terminal. The synchronization condition of the terminal refers to, for example, whether the terminal is synchronized with the network device corresponding to the measured cell.

In some embodiments, the fifth threshold is determined by the terminal based on a sum of a sixth preset threshold and a third offset value. In some embodiments, the sixth preset threshold is configured by the network device, e.g., configured by the network device through the SIB. The third offset value is determined by the terminal from a plurality of third preset offset values based on at least one of the following: the type of the second receiver, the type of the measured reference signal, or the reception mode of the second receiver. In some embodiments, a configuration manner for the plurality of third preset offset values includes at least one of the following: being configured by the network device, e.g., configured by the network device through the SIB; being predefined in the protocol; or, being determined by the terminal.

In some embodiments, the terminal may determine an error range of the measurement by the receiver based on the measurement result for the same cell by the receiver within the past preset duration range. The terminal may determine the third preset offset value corresponding to the second receiver of the first type based on the error range of the second receiver of the first type.

In some embodiments, the neighboring cell of the serving cell of the terminal includes at least one of the following: an intra-frequency neighboring cell of the serving cell, or an inter-frequency neighboring cell of the serving cell.

In some embodiments, for the second receiver of the same type, or the measurement by the second receiver in the same situation (consisting of at least one of the following: the type of the second receiver, the type of the measured reference signal, or the reception mode of the second receiver), the fifth threshold for the intra-frequency neighboring cell and the fifth threshold for the inter-frequency neighboring cell are the same. In some embodiments, for the second receiver of the same type, or the measurement by the second receiver in the same situation, the fifth threshold for the intra-frequency neighboring cell is different from the fifth threshold for the inter-frequency neighboring cell.

In the embodiments, the operations of 1102 and 1104 are optional; and in different embodiments, one or more of such operations may be omitted or replaced.

The operation of 1102 may be implemented as an independent embodiment, for example, a separate implementation as the threshold configuration method on the network device side. The operation of 1104 may be implemented as an independent embodiment, for example, a separate implementation as the cell selection method or the cell reselection method on the terminal side.

In summary, in the method provided in the embodiments, by performing the cell selection and/or reselection based on the measurement result difference and the preset threshold, it is clarified that an implementation of the cell selection and/or reselection of the terminal in a case where the measurement by the second receiver with low power consumption is involved. By presetting the threshold, the corresponding threshold can be selected based on the measurement situation to perform the cell selection and/or reselection, so as to overperformance or underperformance by adopting the same performance index for different types of second receivers.

In the method provided in the embodiments, by providing the plurality of fifth preset thresholds, the operation of determining the fifth threshold for the cell selection and/or reselection based on the measurement situation of the measurement by the second receiver is realized, and the operation of setting the thresholds for the cell selection and/or reselection respectively for different measurement situations is also realized. By providing the sixth preset threshold and the plurality of third preset offset values, the operation of determining the fifth threshold for the cell selection and/or reselection based on the measurement situation of the second receiver is realized, and the operation of setting the thresholds for the selection and/or cell reselection respectively for different measurement situations is also realized.

### For the aforementioned contents of Part (3):

FIG. 12 is a flowchart of a reporting method according to an exemplary embodiment of the present disclosure. The method can be used in the system shown in FIG. 7, and the method includes the following operation 1202.

**At block 1202,** the terminal reports, to the network device, the measurement type of measurement by the second receiver.

The measurement type is used to determine at least one of the following: a delay requirement of the measurement result measured by the second receiver or an accuracy requirement of the measurement result measured by the second receiver, e.g., determined by the network device. In some embodiments, the measurement type may be equivalent to/replaced with a measurement situation. In some embodiments, the terminal reporting the measurement type supports at least one of preforming the measurement by using the second receiver or preforming the EMR measurement by using the second receiver in the RRC CONNECTED mode.

In some embodiments, the measurement type includes at least one of the following: the type of the second receiver; the signal-to-noise ratio (Es/Iot) during the measurement by the second receiver; the number of sampling times during the measurement by the second receiver; or the type of the reference signal measured by the second receiver.

In some embodiments, the above measurement type is carried in the user capability reported by the terminal. For example, as the terminal capability reported to the network device, that is, the information with a per-terminal (per-UE) granularity, the reported information is applicable to all measurement results of the terminal based on the second receiver. In some embodiments, the aforementioned measurement type is carried in additional information of the measurement result of the second receiver reported by the terminal, and the measurement type is reported for the measurement result of the second receiver. For example, the measurement type of the second receiver is reported to the network device as the additional information when the measurement result is reported, that is, the information with a per-measurement result (per measurement result) granularity, the reported information is only applicable to the corresponding measurement result, and different measurement results may correspond to different measurement types.

In some embodiments, for different measurement types of the second receiver, the corresponding different delay requirements and/or accuracy requirements may be formulated in the protocol. For example, in the case of the LP-WUR type 1, the measurement period is calculated based on 3 times of sampling, and when Es/Iot> -3 dB, the corresponding measurement accuracy is +/-3 dB. In the case of the LP-WUR type 2, the measurement period is calculated based on 1 time of sampling, and when Es/Iot> -6 dB, the corresponding measurement accuracy is +/-3 dB. It should be noted that the above values (including the number of sampling times, Es/Iot and the value of the accuracy requirement) are all examples, and are only used to illustrate that the measurement period, the accuracy requirement, and the like may be different under different circumstances, which are not intended to limit the embodiments of the present disclosure.

In summary, in the method provided in the embodiments, by reporting the measurement type of the measurement by the second receiver, the delay requirement and/or the accuracy requirement of the measurement by the second receiver can be determined. This clarifies the determination manner for the requirement for the measurement result when the measurement is performed by the terminal with the low power consumption.

In the method provided in the embodiments, the measurement type is reported by the means of the user capability, which provides a way of reporting the measurement type with the per-terminal granularity. In addition, the measurement type is reported by the means of the additional information, which provides a way to report the measurement type with the per-measurement result granularity.

It should be noted that the order of the method operations provided in the embodiments of the present disclosure may be appropriately adjusted, the operations may also be correspondingly increased or decreased based on the situations, and different operations may be freely combined to form a new embodiment. Any varied method that can be easily conceived by a person skilled in the art within the technical scope disclosed in the present disclosure shall fall within the scope of protection of the present disclosure, and therefore, details are not be described herein. In addition, the order of the aforementioned different cases does not have a preferred meaning, and is only for convenience of description.

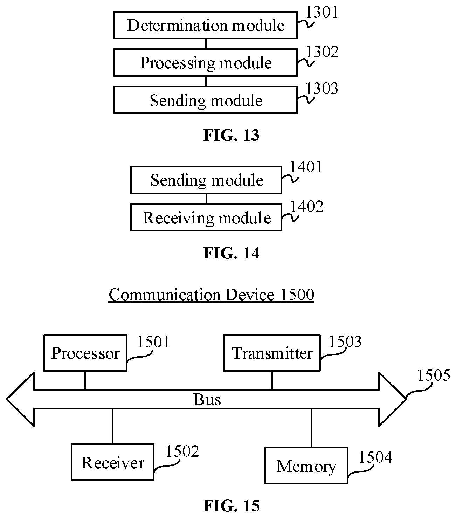

FIG. 13 is a block diagram of a cell measurement apparatus according to an exemplary embodiment of the present disclosure. The apparatus may be implemented as a terminal, or a part of a terminal, by software, hardware or a combination thereof. The apparatus includes at least some of the following: a determination module 1301, a processing module 1302, and a sending module 1303.

The determination module 1301 is configured to determine, based on a measurement result and a threshold, to perform cell measurement by using at least one of a first receiver or a second receiver.

The measurement result includes at least one of a first measurement result or a second measurement result. Herein, the first measurement result is acquired through measurement by the first receiver, and the second measurement result is acquired through measurement by the second receiver. In some embodiments, the first measurement result and the second measurement result are measurement results for a serving cell of the apparatus. In some embodiments, the first measurement result and the second measurement result are acquired by measuring a reference signal. In some embodiments, the apparatus is in an RRC IDLE mode or an RRC INACTIVE mode.

The power consumption of the first receiver is higher than the power consumption of the second receiver, that is, the power consumption of performing the measurement by using the first receiver is higher than the power consumption of performing the measurement by using the second receiver. In some embodiments, the first receiver is an MR, and the second receiver is an LP-WUR.

In some embodiments, the above threshold is configured by a network device. In some embodiments, the above threshold is determined based on information configured by the network device. In some embodiments, the above threshold is predefined in a protocol. In some embodiments, the above threshold is determined based on the information configured by the network device in combination with the information predefined in the protocol.

In some embodiments, the second measurement result corresponds to a plurality of thresholds, and the plurality of thresholds belong to the aforementioned threshold(s). When determining a receiver used for the cell measurement based on the second measurement result, the apparatus determines a currently-used threshold from the plurality of thresholds, and further compares it with the second measurement result, thereby determining the receiver used for the cell measurement.

### For the case of offloading from the first receiver to the second receiver:

In some embodiments, the apparatus is currently in a state of performing the cell measurement by using the first receiver. In some embodiments, during the process of performing the cell measurement by using the first receiver, the apparatus may also perform the cell measurement by using the second receiver. In some embodiments, the offloading from the first receiver to the second receiver refers to the switching from the state of performing the cell measurement by using the first receiver to the state of performing the cell measurement only by using the second receiver. After the switching, the apparatus may turn off the first receiver or enable the first receiver to enter the deep sleep state.

### • For the case of determination based on the first measurement result:

In some embodiments, the determination module 1301 is configured to, when the first measurement result satisfies a first condition, determine to perform the cell measurement by using the second receiver, and/or turn off the first receiver. In such case, the apparatus performs the cell measurement by using only the second receiver. In some embodiments, the first condition may be replaced with/equivalent to an entry condition for measurement by using the second receiver. Turning off the first receiver may be replaced with/equivalent to enabling the first receiver to enter the deep sleep state.

The first condition includes the first measurement result being greater than or equal to a first threshold. Being greater than or equal to the first threshold includes at least one of the following: being greater than the first threshold, being equal to the first threshold, or being greater than or equal to the first threshold. In some embodiments, the first threshold is configured by the network device, e.g., configured by the network device through a SIB. In some embodiments, the first threshold is predefined in the protocol.

### • For the case of determination based on the first measurement result and the second measurement result:

In some embodiments, the determination module 1301 is configured to, when the measurement result satisfies the first condition, determine to perform the cell measurement by using the second receiver, and/or turn off the first receiver. In such case, the apparatus performs the cell measurement by using only the second receiver. In some embodiments, the first condition may be replaced with/equivalent to an entry condition for measurement by using the second receiver. Turning off the first receiver may be replaced with/equivalent to enabling the first receiver to enter the deep sleep state.

The first condition includes at least one of the following: the first measurement result being greater than or equal to a second threshold; or, the second measurement result being greater than or equal to a third threshold. Herein, the third threshold belongs to the plurality of thresholds mentioned above. Being greater than or equal to the second threshold includes at least one of the following: being greater than the second threshold, being equal to the second threshold, or being greater than or equal to the second threshold. Being greater than or equal to the third threshold includes at least one of the following: being greater than the third threshold, being equal to the third threshold, or being greater than or equal to the third threshold.

In some embodiments, the second threshold is configured by the network device, e.g., configured by the network device through the SIB. In some embodiments, the second threshold is predefined in the protocol.

In some embodiments, the third threshold is determined by the apparatus from a plurality of first preset thresholds based on at least one of the following: a type of the second receiver, a type of a measured reference signal, or a reception mode of the second receiver. In some embodiments, the type of the second receiver includes multiple receiver types among the receiver types shown in FIGS. 1 to 5, and may include other more types, which are not limited in the embodiments of the present disclosure. In some embodiments, the plurality of first preset thresholds are configured by the network device, e.g., configured by the network device through the SIB.

In some embodiments, the third threshold is determined by the apparatus based on the sum of a second preset threshold and a first offset value. In some embodiments, the second preset threshold is configured by the network device, e.g., configured by the network device through the SIB. In some embodiments, the second preset threshold is the same as the second threshold described above. The first offset value is determined by the apparatus from a plurality of first preset offset values based on at least one of the following: the type of the second receiver, the type of the measured reference signal, or the reception mode of the second receiver. In some embodiments, the configuration manner for the plurality of first preset offset values includes at least one of the following: being configured by the network device, e.g., configured by the network device through the SIB; being predefined in the protocol; or, being determined by the apparatus.

In some embodiments, the apparatus determines the first preset offset value corresponding to the second receiver of the first type, based on a difference between the measurement results for the same cell by the first receiver and the second receiver of the first type within the past preset duration range. Exemplarily, the apparatus performs the cell measurement by using both the MR and the LP-WUR in a previous relatively long period of time, and finds that the measurement result (the average measurement result) for the same cell measured by the two receivers substantially satisfies RSRP_WUR-RSRP_MR = -3 dB; then, the apparatus may set the first preset offset value corresponding to the LP-WUR of this type to be -3 dB.

### For the case of falling back from the second receiver to the first receiver:

In some embodiments, the apparatus is currently in a state of performing the cell measurement by using only the second receiver. In some embodiments, falling back from the second receiver to the first receiver refers to the switching from the state of performing the cell measurement only by using the second receiver to the state of performing the cell measurement by using the first receiver. After the switching, the apparatus may turn on the first receiver or wakes up the first receiver from a deep sleep state. In some embodiments, during the process of performing the cell measurement by using the first receiver, the apparatus may also perform the cell measurement by using the second receiver.

In some embodiments, the determination module 1301 is configured to, when the second measurement result satisfies the second condition, determine to perform the cell measurement by using the first receiver. In some embodiments, the second condition may be replaced with/equivalent to an exit condition for measurement by using the second receiver.

The second condition includes the second measurement result being less than or equal to a fourth threshold. The fourth threshold belongs to the aforementioned plurality of thresholds. Being less than or equal to the fourth threshold includes at least one of the following: being less than the fourth threshold; being equal to the fourth threshold; or being less than or equal to the fourth threshold.

In some embodiments, the fourth threshold is determined by the apparatus from a plurality of third preset thresholds based on at least one of the following: the type of the second receiver, the type of the measured reference signal, or the reception mode of the second receiver. In some embodiments, the plurality of third preset thresholds are configured by the network device, e.g., configured by the network device through the SIB.

In some embodiments, the fourth threshold is determined by the apparatus based on a sum of a fourth preset threshold and a second offset value. In some embodiments, the fourth preset threshold is configured by the network device, e.g., configured by the network device through the SIB. The second offset value is determined by the apparatus from a plurality of second preset offset values based on at least one of the following: the type of the second receiver, the type of the measured reference signal, or the reception mode of the second receiver. In some embodiments, a configuration manner for the plurality of second preset offset values includes at least one of the following: being configured by the network device, e.g., configured by the network device through the SIB; being predefined in the protocol; or, being determined by the apparatus.

In some embodiments, the apparatus determines the second preset offset value corresponding to the second receiver of the first type, based on the difference between the measurement results for the same cell by the first receiver and the second receiver of the first type within the past preset duration range.

It should be noted that, in addition to the contents described above, the first condition and the second condition may be further superimposed with other conditions, for example, superimposed with a low mobility condition and/or a not-at-cell-edge condition in the related technologies.

In some embodiments, for the apparatus performing the measurement by using the second receiver, a measurement period of the second receiver is determined in at least one of the following manners: being determined based on a DRX cycle of the apparatus; being determined based on a cycle of a reference signal measured by the second receiver; being determined based on a measurement window corresponding to a reference signal configured for the second receiver by the network device; or, being determined based on the number of sampling times of the reference signal measured by the second receiver.

### For cell selection/reselection conditions:

In some embodiments, the processing module 1302 is configured to perform at least one of the cell selection or cell reselection based on a measurement result difference and a fifth threshold. Herein, the measurement result difference is a difference between a third measurement result and a fourth measurement result, the third measurement result is acquired by measuring a serving cell of the apparatus by the second receiver, and the fourth measurement result is acquired by measuring a neighboring cell of the serving cell of the apparatus by the second receiver. Based on the measurement result difference and the fifth threshold, the apparatus may determine whether to select/reselect to the neighboring cell. In some embodiments, the apparatus performing the above processes is in the RRC IDLE mode or the RRC INACTIVE mode.

In some embodiments, the fifth threshold is determined from a plurality of fifth preset thresholds based on at least one of the following: the type of the second receiver, the type of the measured reference signal, or the reception mode of the second receiver. In some embodiments, the plurality of fifth preset thresholds are configured by the network device, e.g., configured by the network device through the SIB.

In some embodiments, the fifth threshold is determined by the apparatus based on a sum of a sixth preset threshold and a third offset value. In some embodiments, the sixth preset threshold is configured by the network device, e.g., configured by the network device through the SIB. The third offset value is determined by the apparatus from a plurality of third preset offset values based on at least one of the following: the type of the second receiver, the type of the measured reference signal, or the reception mode of the second receiver. In some embodiments, a configuration manner for the plurality of third preset offset values includes at least one of the following: being configured by the network device, e.g., configured by the network device through the SIB; being predefined in the protocol; or, being determined by the apparatus.

In some embodiments, the apparatus may determine an error range of the measurement by the receiver based on the measurement result for the same cell by the receiver within the past preset duration range. The apparatus may determine the third preset offset value corresponding to the second receiver of the first type based on the error range of the second receiver of the first type.

In some embodiments, the neighboring cell of the serving cell of the apparatus includes at least one of the following: an intra-frequency neighboring cell of the serving cell, or an inter-frequency neighboring cell of the serving cell.

In some embodiments, for the second receiver of the same type, or the measurement by the second receiver in the same situation (consisting of at least one of the following: the type of the second receiver, the type of the measured reference signal, or the reception mode of the second receiver), the fifth threshold for the intra-frequency neighboring cell and the fifth threshold for the inter-frequency neighboring cell are the same. For example, both are acquired by adding 3 dB based on the corresponding threshold in the related technologies. In some embodiments, for the second receiver of the same type, or the measurement by the second receiver in the same situation, the fifth threshold for the intra-frequency neighboring cell is different from the fifth threshold for the inter-frequency neighboring cell. For example, the one for the intra-frequency neighboring cell is acquired by adding 3 dB based on the corresponding threshold in the related technologies; and the one for the inter-frequency neighboring cell is acquired by adding 4 dB based on the corresponding threshold in the related technologies.

### For measurement accuracy/measurement delay:

In some embodiments, the sending module 1303 is configured to report, to the network device, a measurement type of measurement by the second receiver. Herein, the measurement type is used to determine at least one of the following: a delay requirement of the measurement result measured by the second receiver or an accuracy requirement of the measurement result measured by the second receiver, e.g., determined by the network device. In some embodiments, the measurement type may be equivalent to/replaced with a measurement situation. In some embodiments, the apparatus reporting the measurement type supports at least one of preforming the measurement by using the second receiver or preforming the EMR measurement by using the second receiver in the RRC CONNECTED mode.

In some embodiments, the measurement type includes at least one of the following: a type of the second receiver; a signal-to-noise ratio (Es/Iot) during the measurement by the second receiver; the number of sampling times during the measurement by the second receiver; or a type of the reference signal measured by the second receiver.

In some embodiments, the above measurement type is carried in the user capability reported by the apparatus. In some embodiments, the aforementioned measurement type is carried in additional information of the measurement result of the second receiver reported by the apparatus, and the measurement type is reported for the measurement result of the second receiver.

In some embodiments, for different measurement types of the second receiver, the corresponding different delay requirements and/or accuracy requirements may be formulated in the protocol.

In some embodiments, the apparatus provided in the embodiments of the present disclosure includes one determination module 1301, and the determination module 1301 supports execution of all determination-related operations performed by the terminal in each of the foregoing embodiments.

In some embodiments, the apparatus provided in the embodiments of the present disclosure includes multiple determination modules 1301, and the multiple determination modules 1301 respectively support the execution of partial determination-related operations performed by the terminal in each of the foregoing embodiments.

In some embodiments, the operations performed by the different determination modules 1301 may be identical, or partially identical, or completely different.

In some embodiments, the apparatus provided in the embodiments of the present disclosure includes one processing module 1302, and the processing module 1302 supports the execution of all processing-related operations performed by the terminal in each of the foregoing embodiments.

In some embodiments, the apparatus provided in the embodiments of the present disclosure includes multiple processing modules 1302, and the multiple processing modules 1302 respectively support the execution of partial processing-related operations performed by the terminal in each of the foregoing embodiments.

In some embodiments, the operations performed by the different processing modules 1302 may be identical, or partially identical, or completely different.

In some embodiments, the apparatus provided in the embodiments of the present disclosure includes one sending module 1303, and the sending module 1303 supports the execution of all sending-related operations performed by the terminal in each of the foregoing embodiments.

In some embodiments, the apparatus provided in the embodiments of the present disclosure includes multiple sending modules 1303, and the multiple sending modules respectively support the execution of partial sending-related operations performed by the terminal in each of the foregoing embodiments.

In some embodiments, the operations performed by different sending modules 1303 may be identical, or partially identical, or completely different.

In summary, in the apparatus provided in the embodiments, by determining the receiver to be used for the cell measurement based on the measurement result and the threshold, it is clarified that the implementation of the cell measurement of the terminal when the second receiver with low power consumption is involved. By setting the plurality of thresholds, the corresponding threshold(s) can be selected based on the type of the second receiver to determine the receiver to be used for the cell measurement, thereby avoiding overperformance or underperformance caused by adopting the same performance index for different types of second receivers.

FIG. 14 is a block diagram of a threshold configuration apparatus according to an exemplary embodiment of the present disclosure. The apparatus may be implemented as a network device, or a part of a network device, by software, hardware or a combination thereof. The apparatus includes at least some of the following: a sending module 1401 and a receiving module 1402.

The sending module 1401 is configured to configure a threshold to the terminal. The threshold configured to the terminal is used for the terminal to determine, based on the measurement result and the threshold, to perform cell measurement by using at least one of a first receiver or a second receiver. The measurement result includes at least one of a first measurement result or a second measurement result. Herein, the first measurement result is acquired through measurement by the first receiver, and the second measurement result is acquired through measurement by the second receiver. The power consumption of the first receiver is higher than the power consumption of the second receiver, that is, the power consumption of performing the measurement by using the first receiver is higher than the power consumption of performing the measurement by using the second receiver. In some embodiments, the first receiver is an MR, and the second receiver is an LP-WUR.

In some embodiments, the threshold configured by the apparatus to the terminal is used for determining a plurality of thresholds corresponding to the second measurement result. When determining a receiver used for the cell measurement based on the second measurement result, the terminal determines a currently-used threshold from the plurality of thresholds, and compares it with the second measurement result, thereby, determining the receiver used for the cell measurement.

In some embodiments, the sending module 1401 is configured to configure the first threshold to the terminal, e.g., configuring the first threshold through a SIB. The first threshold is used to be compared with the first measurement result, such that the terminal can determine to perform the cell measurement by using the second receiver, and/or, turn off the first receiver.

In some embodiments, the sending module 1401 is configured to configure the second threshold to the terminal, e.g., configuring the second threshold through the SIB. In some embodiments, the sending module 1401 is configured to configure a plurality of first preset thresholds to the terminal, e.g., configuring the first preset thresholds through the SIB. In some embodiments, the sending module 1401 is configured to configure the second preset threshold to the terminal, e.g., configuring the second preset threshold through the SIB. Herein, the plurality of first preset thresholds are used for the terminal to determine a third threshold based on at least one of the following: a type of the second receiver, a type of a measured reference signal, or a reception mode of the second receiver; and the second preset threshold is used for the terminal to determine the third threshold based on a sum of the second preset threshold and a first offset value. Thereby, the terminal can compare the second threshold with the first measurement result, and/or compare the third threshold with the second measurement result, such that the terminal can determine to perform the cell measurement by using the second receiver, and/or turn off the first receiver. In some embodiments, the first offset value is determined by the terminal from a plurality of first preset offset values based on at least one of the following: the type of the second receiver, the type of the measured reference signal, or the reception mode of the second receive. In some embodiments, the configuration manner for the plurality of first preset offset values includes at least one of the following: being configured by the apparatus, e.g., configured by the apparatus through the SIB; being predefined in the protocol; or, being determined by the terminal.

In some embodiments, the sending module 1401 is configured to configure a plurality of third preset thresholds to the terminal, e.g., configuring the third preset thresholds through the SIB. In some embodiments, the sending module 1401 is configured to configure a fourth preset threshold to the terminal, e.g., configuring fourth preset threshold through the SIB. Herein, the plurality of third preset thresholds are used for the terminal to determine the fourth threshold based on at least one of the following: the type of the second receiver, the type of the measured reference signal, or the reception mode of the second receiver. The fourth preset threshold is used for the terminal to determine the fourth threshold based on a sum of the fourth preset threshold and a second offset value. Thereby, the terminal can compare the fourth threshold with the second measurement result, such that the terminal can determine to perform the cell measurement by using the first receiver. In some embodiments, the second offset value is determined by the terminal from a plurality of second preset offset values based on at least one of the following: the type of the second receiver, the type of the measured reference signal, or the reception mode of the second receiver. In some embodiments, the configuration manner for the plurality of second preset offset values includes at least one of the following: being configured by the apparatus, e.g., configured by the apparatus through the SIB; being predefined in the protocol; or, being determined by the terminal.

It should be noted that, for the implementation process of the terminal determining the receiver used for the cell measurement based on the measurement result and the corresponding threshold, reference may be made to the relevant description in the foregoing embodiments, and details are not described herein again in the embodiments of the present disclosure.

In some embodiments, the sending module 1401 is configured to configure a plurality of fifth preset thresholds to the terminal, e.g., configuring the fifth preset thresholds through the SIB. Herein, the plurality of fifth preset thresholds are used for the terminal to determine the fifth threshold based on at least one of the following: the type of the second receiver, the type of the measured reference signal, or the reception mode of the second receiver. In some embodiments, the sending module 1401 is configured to configure the sixth preset threshold to the terminal, e.g., configuring the sixth preset threshold through the SIB. Herein, the sixth preset threshold is used for the terminal to determine the fifth threshold based on a sum of the sixth preset threshold and a third offset value. Thereby, the terminal can compare the fifth threshold with a measurement result difference, such that the terminal can perform at least one of the cell selection or cell reselection. The measurement result difference is a difference between a third measurement result and a fourth measurement result, the third measurement result is acquired by measuring a serving cell of the terminal by the second receiver; and the fourth measurement result is acquired by measuring a neighboring cell of the serving cell of the terminal by the second receiver.

In some embodiments, the third offset value is determined by the terminal from a plurality of third preset offset values based on at least one of the following: the type of the second receiver, the type of the measured reference signal, or the reception mode of the second receiver. In some embodiments, a configuration manner for the plurality of third preset offset values includes at least one of the following: being configured by the apparatus, e.g., configured by the apparatus through the SIB; being predefined in the protocol; or, being determined by the terminal.

It should be noted that, for the implementation process of the terminal performing the cell selection and/or reselection based on the measurement result difference and the corresponding threshold, reference may be made to the relevant description in the foregoing embodiments, and details are not described herein again in the embodiments of the present disclosure.

In some embodiments, the receiving module 1402 is configured to receive a measurement type of measurement by the second receiver that is reported by the terminal. Herein, the measurement type is used to determine at least one of the following: a delay requirement of the measurement result measured by the second receiver or an accuracy requirement of the measurement result measured by the second receiver, e.g., determined by the apparatus. In some embodiments, the measurement type may be equivalent to/replaced with a measurement situation. In some embodiments, the terminal reporting the measurement type supports at least one of preforming the measurement by using the second receiver and preforming the EMR measurement by using the second receiver in the RRC CONNECTED mode.

In some embodiments, the measurement type includes at least one of the following: a type of the second receiver; a signal-to-noise ratio during the measurement by the second receiver; the number of sampling times during the measurement by the second receiver; or the type of the reference signal measured by the second receiver. In some embodiments, the above measurement type is carried in the user capability reported by the terminal. In some embodiments, the aforementioned measurement type is carried in additional information of the measurement result of the second receiver reported by the terminal, and the measurement type is reported for the measurement result of the second receiver.

In some embodiments, the apparatus provided in the embodiments of the present disclosure includes one sending module 1401, and the sending module 1401 supports the execution of all sending-related operations performed by the network device in each of the foregoing embodiments.

In some embodiments, the apparatus provided in the embodiments of the present disclosure includes multiple sending modules 1401, and the multiple sending modules 1401 respectively support the execution of partial sending-related operations performed by the network device in each of the foregoing embodiments.

In some embodiments, the operations performed by different sending modules 1401 may be identical, or partially identical, or completely different.

In some embodiments, the apparatus provided in the embodiments of the present disclosure includes one receiving module 1402, and the receiving module 1402 supports the execution of all the receiving-related operations performed by the network device in the foregoing embodiments.

In some embodiments, the apparatus provided in the embodiments of the present disclosure includes multiple receiving modules 1402, and the multiple receiving modules 1402 respectively support the execution of partial reception-related operations performed by the network device in each of the foregoing embodiments.

In some embodiments, the operations performed by different receiving modules 1402 may be identical, or partially identical, or completely different.

In summary, in the apparatus provided in the embodiments, by configuring the threshold(s) to the terminal, it is clarified that the implementation of the cell measurement of the terminal when the second receiver with low power consumption is involved. By setting the plurality of thresholds, the corresponding threshold(s) can be selected based on the type of the second receiver to determine the receiver to be used for the cell measurement, thereby avoiding overperformance or underperformance caused by adopting the same performance index for different types of second receivers.

It should be noted that when the apparatus provided in the foregoing embodiments realizes its function(s), the division of each of the aforementioned function modules is merely used as an example for illustration. In practical applications, the aforementioned function may be allocated to and completed by different functional modules based on actual needs, that is, the internal structure of the apparatus may be divided into different function modules to complete all or part of the aforementioned functions.

Regarding the apparatus in the foregoing embodiments, the specific manner in which each module performs the operation(s) has been described in detail in the embodiments relating to the method, and will not be described in detail herein.

FIG. 15 is a schematic structural diagram of a communication device according to an exemplary embodiment of the present disclosure. The communication device is a terminal or a network device, and the communication device includes a processor 1501, a receiver 1502, a transmitter 1503, a memory 1504, and a bus 1505.

The processor 1501 includes one or more processing cores, and the processor 1501 executes various functional applications and information processing by running software programs and modules.

The receiver 1502 and the transmitter 1503 may be implemented as a communication component, which may be a communication chip.

The memory 1504 is connected to the processor 1501 via the bus 1505. The memory 1504 may be configured to store at least one instruction, and the processor 1501 may be configured to execute the at least one instruction to implement various operations in the foregoing method embodiments.

Furthermore, the memory 1504 may be implemented by any type of volatile or non-volatile storage device or a combination thereof, and the volatile or non-volatile storage device includes, but not limited to: a magnetic disk or optical disk, an Electrically Erasable Programmable Read Only Memory (EEPROM), an Erasable Programmable Read-Only Memory (EPROM), a Static Random-Access Memory (SRAM), a Read-Only Memory (ROM), a magnetic memory, a flash memory, and Programmable Read-Only Memory (PROM).

In some embodiments, in a case where the communication device is implemented as a terminal, the processor 1501 is configured to determine, based on a measurement result and a threshold, to perform cell measurement by using at least one of a first receiver or a second receiver. Herein, the measurement result includes at least one of a first measurement result or a second measurement result; the first measurement result is acquired through measurement by the first receiver, and the second measurement result is acquired through measurement by the second receiver. The power consumption of the first receiver is higher than the power consumption of the second receiver, and the second measurement result corresponds to a plurality of thresholds. In some embodiments, the processor 1501 is further configured to perform other processing-related operations in the foregoing method embodiments.

In some embodiments, in a case where the communication device is implemented as a network device, the processor 1501 is configured to configure a threshold to a terminal. Herein, the threshold is used for the terminal to determine, based on the measurement result and the threshold, to perform cell measurement by using at least one of a first receiver or a second receiver. The measurement result includes at least one of a first measurement result or a second measurement result; the first measurement result is acquired through measurement by the first receiver, and the second measurement result is acquired through measurement by the second receiver. The threshold is used for determining a plurality of thresholds corresponding to the second measurement result. In some embodiments, the processor 1501 is further configured to perform other processing-related operations in the foregoing method embodiments.

In some embodiments, the receiver 1502 independently receives a signal/data, or the processor 1501 controls the receiver 1502 to receive the signal/data, or the processor 1501 requests the receiver 1502 to receive the signal/data, or the processor 1501 cooperates with the receiver 1502 to receive the signal/data.

In some embodiments, the transmitter 1503 independently transmits a signal/data, or the processor 1501 controls the transmitter 1503 to transmit the signal/data, or the processor 1501 requests the transmitter 1503 to transmit the signal/data, or the processor 1501 cooperates with the transmitter 1503 to transmit the signal/data.

In some embodiments, the processor 1501 and the receiver 1502 may be implemented as one module, or the processor 1501 may be implemented as part of the receiver 1502.

In some embodiments, the receiver 1502 may be implemented as a receiver. Optionally, the receiver includes or does not include the processor 1501.

In some embodiments, the processor 1501 and the transmitter 1503 may be implemented as one module, or the processor 1501 may be implemented as part of the transmitter 1503.

In some embodiments, the transmitter 1503 may be implemented as a transmitter. Optionally, the receiver includes or does not include the processor 1501.

In an exemplary embodiment, there is also provided a computer-readable storage medium in which at least one instruction, at least one program, a code set, or an instruction set is stored. The at least one instruction, the at least one program, the code set, or the instruction set is loaded and executed by a processor to implement the cell measurement method or the threshold configuration method provided in each of the foregoing method embodiments.

In an exemplary embodiment, there is also provided a chip including a programmable logic circuit and/or program instructions. When running on a communication device, based on the programmable logic circuit and/or program, the chip is configured to implement the cell measurement method or the threshold configuration method provided in each of the foregoing method embodiments.

In an exemplary embodiment, there is also provided a computer program product. When the computer program product is executed on a processor of a computer device, the computer device is enabled to implement the cell measurement method or the threshold configuration method described above.

In an exemplary embodiment, there is also provided a computer program. The computer program includes computer instructions that are executed by a processor of a computer device to cause the computer device to perform the cell measurement method or the threshold configuration method described above.

Those skilled in the art will recognize that in one or more of the examples described above, the functions described in the embodiments of the present disclosure may be implemented in hardware, software, firmware, or any combination thereof. When implemented by using software, these functions may be stored in a computer-readable medium or transmitted as one or more instructions or code on a computer readable medium. The computer-readable medium includes a computer storage medium and a communication medium, where the communication medium includes any medium that facilitates transferring a computer program from one place to another. The storage medium may be any available medium accessible by a general-purpose or special-purpose computer.

The foregoing descriptions are only exemplary embodiments of the present disclosure, and are not intended to limit the present disclosure. Any modifications, equivalent substitutions, improvements, etc. made within the spirit and principles of the present disclosure shall be included in the scope of protection of the present disclosure.

## Claims

1. A cell measurement method, performed by a terminal, the method comprising:
determining, based on a measurement result and a threshold, to perform cell measurement by using at least one of a first receiver or a second receiver;
wherein the measurement result comprises at least one of a first measurement result or a second measurement result, the first measurement result is acquired through measurement by the first receiver, the second measurement result is acquired through measurement by the second receiver, power consumption of the first receiver is higher than power consumption of the second receiver, and the second measurement result corresponds to a plurality of thresholds.

2. The method of claim 1, wherein determining, based on the measurement result and the threshold, to perform the cell measurement by using the at least one of the first receiver or the second receiver comprises:
in a case where the first measurement result satisfies a first condition, determining to perform the cell measurement by using the second receiver, and/or, turning off the first receiver;
wherein the first condition comprises the first measurement result being greater than or equal to a first threshold.

3. The method of claim 1 or 2, wherein determining, based on the measurement result and the threshold, to perform the cell measurement by using the at least one of the first receiver or the second receiver comprises:
in a case where the measurement result satisfies a first condition, determining to perform the cell measurement by using the second receiver, and/or, turning off the first receiver;
wherein the first condition comprises at least one of the following: the first measurement result being greater than or equal to a second threshold, or the second measurement result being greater than or equal to a third threshold; and the third threshold belongs to the plurality of thresholds.

4. The method of claim 3, wherein the third threshold is determined from a plurality of first preset thresholds based on at least one of the following: a type of the second receiver, a type of a measured reference signal, or a reception mode of the second receiver.

5. The method of claim 4, wherein the plurality of first preset thresholds are configured by a network device.

6. The method of any one of claims 3 to 5, wherein the third threshold is determined based on a sum of a second preset threshold and a first offset value; the first offset value is determined from a plurality of first preset offset values based on at least one of the following: a type of the second receiver, a type of a measured reference signal, or a reception mode of the second receiver.

7. The method of claim 6, wherein the second preset threshold is configured by a network device.

8. The method of claim 6 or 7, wherein a configuration manner for the plurality of first preset offset values comprises at least one of the following:
being configured by a network device; being predefined in a protocol; or, being determined by the terminal.

9. The method of any one of claims 1 to 8, wherein determining, based on the measurement result and the threshold, to perform the cell measurement by using the at least one of the first receiver or the second receiver comprises:
in a case where the second measurement result satisfies a second condition, determining to perform the cell measurement by using the first receiver;
wherein the second condition comprises the second measurement result being less than or equal to a fourth threshold, and the fourth threshold belongs to the plurality of thresholds.

10. The method of claim 9, wherein the fourth threshold is determined from a plurality of third preset thresholds based on at least one of the following: a type of the second receiver, a type of a measured reference signal, or a reception mode of the second receiver.

11. The method of claim 10, wherein the plurality of third preset thresholds are configured by a network device.

12. The method of any one of claims 9 to 11, wherein the fourth threshold is determined based on a sum of a fourth preset threshold and a second offset value; the second offset value is determined from a plurality of second preset offset values based on at least one of the following: a type of the second receiver, a type of a measured reference signal, or a reception mode of the second receiver.

13. The method of claim 12, wherein the fourth preset threshold is configured by a network device.

14. The method of claim 12 or 13, wherein a configuration manner for the plurality of second preset offset values comprises at least one of the following:
being configured by a network device; being predefined in a protocol; or, being determined by the terminal.

15. The method of any one of claims 1 to 14, wherein a measurement period of the second receiver is determined by at least one of the following manners:
being determined based on a discontinuous reception (DRX) cycle of the terminal; being determined based on a cycle of a reference signal measured by the second receiver; being determined based on a measurement window corresponding to a reference signal configured for the second receiver by a network device; or, being determined based on a number of sampling times of a reference signal measured by the second receiver.

16. The method of any one of claims 1 to 15, wherein the first measurement result and the second measurement result are measurement results for a serving cell of the terminal.

17. The method of any one of claims 1 to 16, further comprising:
performing at least one of cell selection or cell reselection based on a measurement result difference and a fifth threshold;
wherein the measurement result difference is a difference between a third measurement result and a fourth measurement result, the third measurement result is acquired by measuring a serving cell of the terminal by the second receiver, and the fourth measurement result is acquired by measuring a neighboring cell of the serving cell of the terminal by the second receiver.

18. The method of claim 17, wherein the fifth threshold is determined from a plurality of fifth preset thresholds based on at least one of the following: a type of the second receiver, a type of a measured reference signal, or a reception mode of the second receiver.

19. The method of claim 18, wherein the plurality of fifth preset thresholds are configured by a network device.

20. The method of any one of claims 17 to 19, wherein the fifth threshold is determined based on a sum of a sixth preset threshold and a third offset value; the third offset value is determined from a plurality of third preset offset values based on at least one of the following: a type of the second receiver, a type of a measured reference signal, or a reception mode of the second receiver.

21. The method of claim 20, wherein the sixth preset threshold is configured by a network device.

22. The method of claim 20 or 21, wherein a configuration manner for the plurality of third preset offset values comprises at least one of the following:
being configured by a network device; being predefined in a protocol; or, being determined by the terminal.

23. The method of any one of claims 17 to 22, wherein the neighboring cell comprises at least one of the following: an intra-frequency neighboring cell of the serving cell, or an inter-frequency neighboring cell of the serving cell.

24. The method of any one of claims 1 to 23, wherein the terminal is in a radio resource control (RRC) IDLE mode or an RRC INACTIVE mode.

25. The method of any one of claims 1 to 24, further comprising:
reporting, to a network device, a measurement type of the measurement by the second receiver;
wherein the measurement type is used to determine at least one of the following: a delay requirement of the measurement by the second receiver, or an accuracy requirement of the measurement by the second receiver.

26. The method of claim 25, wherein the measurement type is carried in a user capability reported by the terminal.

27. The method of claim 25 or 26, wherein the measurement type is carried in additional information of a measurement result of the second receiver reported by the terminal, and the measurement type is reported for the measurement result of the second receiver.

28. The method of any one of claims 25 to 27, wherein the measurement type comprises at least one of the following: a type of the second receiver; a signal-to-noise ratio during the measurement by the second receiver; a number of sampling times during the measurement by the second receiver; or a type of a reference signal measured by the second receiver.

29. The method of any one of claims 25 to 28, wherein the terminal supports at least one of the following: performing the measurement by the second receiver or performing early measurement report (EMR) measurement by the second receiver in a RRC CONNECTED mode.

30. The method of any one of claims 1 to 29, wherein the first receiver is a main receiver (MR) and the second receiver is a low power wake up receiver (LP-WUR).

31. A threshold configuration method, performed by a network device, the method comprising:
configuring a threshold to a terminal;
wherein the threshold is used for the terminal to determine, based on a measurement result and the threshold, to perform cell measurement by using at least one of a first receiver or a second receiver; the measurement result comprises at least one of a first measurement result or a second measurement result, the first measurement result is acquired through measurement by the first receiver, the second measurement result is acquired through measurement by the second receiver, and the threshold is used for determining a plurality of thresholds corresponding to the second measurement result.

32. The method of claim 31, wherein configuring the threshold to the terminal comprises:
configuring a plurality of first preset thresholds to the terminal;
wherein the plurality of first preset thresholds are used for the terminal to determine a third threshold based on at least one of the following: a type of the second receiver, a type of a measured reference signal, or a reception mode of the second receiver; and the third threshold is used for the terminal to determine to perform cell measurement by using the second receiver, and/or, turn off the first receiver.

33. The method of claim 31 or 32, wherein configuring the threshold to the terminal comprises:
configuring a second preset threshold to the terminal;
wherein the second preset threshold is used for the terminal to determine a third threshold based on a sum of the second preset threshold and a first offset value; the third threshold is used for the terminal to determine to perform cell measurement by using the second receiver, and/or, turn off the first receiver; and the first offset value is determined by the terminal from a plurality of first preset offset values based on at least one of the following: a type of the second receiver, a type of a measured reference signal, or a reception mode of the second receiver.

34. The method of claim 33, wherein a configuration manner for the plurality of first preset offset values comprises at least one of the following:
being configured by the network device; being predefined in a protocol; or, being determined by the terminal.

35. The method of any one of claims 31 to 34, wherein configuring the threshold to the terminal comprises:
configuring a plurality of third preset thresholds to the terminal;
wherein the plurality of third preset thresholds are used for the terminal to determine a fourth threshold based on at least one of the following: a type of the second receiver, a type of a measured reference signal, or a reception mode of the second receiver; and the fourth threshold is used for the terminal to determine to perform cell measurement by using the first receiver.

36. The method of any one of claims 31 to 35, wherein configuring the threshold to the terminal comprises:
configuring a fourth preset threshold to the terminal;
wherein the fourth preset threshold is used for the terminal to determine a fourth threshold based on a sum of the fourth preset threshold and a second offset value; the fourth threshold is used for the terminal to determine to perform cell measurement by using the first receiver; and the second offset value is determined by the terminal from a plurality of second preset offset values based on at least one of the following: a type of the second receiver, a type of a measured reference signal, or a reception mode of the second receiver.

37. The method of claim 36, wherein a configuration manner for the plurality of second preset offset values comprises at least one of the following:
being configured by the network device; being predefined in a protocol; or, being determined by the terminal.

38. The method of any one of claims 31 to 37, wherein the first measurement result and the second measurement result are measurement results for a serving cell of the terminal.

39. The method of any one of claims 31 to 38, further comprising:
configuring a plurality of fifth preset thresholds to the terminal;
wherein the plurality of fifth preset thresholds are used for the terminal to determine a fifth threshold based on at least one of the following: a type of the second receiver, a type of a measured reference signal, or a reception mode of the second receive; and the fifth threshold is used for the terminal to perform at least one of cell selection or cell reselection based on the fifth threshold and a measurement result difference; the measurement result difference is a difference between a third measurement result and a fourth measurement result, the third measurement result is acquired by measuring a serving cell of the terminal by the second receiver, and the fourth measurement result is acquired by measuring a neighboring cell of the serving cell of the terminal by the second receiver.

40. The method of any one of claims 31 to 39, further comprising:
configuring a sixth preset threshold to the terminal;
wherein the sixth preset threshold is used for the terminal to determine a fifth threshold based on a sum of the sixth preset threshold and a third offset value; the fifth threshold is used for the terminal to perform at least one of cell selection or cell reselection based on the fifth threshold and a measurement result difference, the measurement result difference is a difference between a third measurement result and a fourth measurement result, the third measurement result is acquired by measuring a serving cell of the terminal by the second receiver, the fourth measurement result is acquired by measuring a neighboring cell of the serving cell of the terminal by the second receiver; and the third offset value is determined by the terminal from a plurality of third preset offset values based on at least one of the following: a type of the second receiver, a type of a measured reference signal, or a reception mode of the second receiver.

41. The method of claim 40, wherein a configuration manner for the plurality of third preset offset values comprises at least one of the following:
being configured by the network device; being predefined in a protocol; or, being determined by the terminal.

42. The method of any one of claims 39 to 41, wherein the neighboring cell comprises at least one of the following: an intra-frequency neighboring cell of the serving cell, or an inter-frequency neighboring cell of the serving cell.

43. The method of any one of claims 31 to 42, wherein the terminal is in a radio resource control (RRC) IDLE mode or an RRC INACTIVE mode.

44. The method of any one of claims 31 to 43, further comprising:
receiving a measurement type of the measurement by the second receiver that is reported by the terminal;
wherein the measurement type is used to determine at least one of the following: a delay requirement of the measurement by the second receiver, or an accuracy requirement of the measurement by the second receiver.

45. The method of claim 44, wherein the measurement type is carried in a user capability reported by the terminal.

46. The method of claim 44 or 45, wherein the measurement type is carried in additional information of a measurement result of the second receiver reported by the terminal, and the measurement type is reported for the measurement result of the second receiver.

47. The method of any one of claims 44 to 46, wherein the measurement type comprises at least one of the following: a type of the second receiver; a signal-to-noise ratio during the measurement by the second receiver; a number of sampling times during the measurement by the second receiver; or a type of a reference signal measured by the second receiver.

48. The method of any one of claims 44 to 47, wherein the terminal supports at least one of the following: performing the measurement by the second receiver or performing early measurement report (EMR) measurement by the second receiver in a RRC CONNECTED mode.

49. The method of any one of claims 31 to 48, wherein the first receiver is a main receiver (MR) and the second receiver is a low power wake up receiver (LP-WUR).

50. A cell measurement apparatus, comprising:
a determination module, configured to determine, based on a measurement result and a threshold, to perform cell measurement by using at least one of a first receiver or a second receiver;
wherein the measurement result comprises at least one of a first measurement result or a second measurement result, the first measurement result is acquired through measurement by the first receiver, the second measurement result is acquired through measurement by the second receiver, power consumption of the first receiver is higher than power consumption of the second receiver, and the second measurement result corresponds to a plurality of thresholds.

51. A threshold configuration apparatus, comprising:
a sending module, configured to configure a threshold to the terminal;
wherein the threshold is used for the terminal to determine, based on a measurement result and the threshold, to perform cell measurement by using at least one of a first receiver or a second receiver; the measurement result comprises at least one of a first measurement result or a second measurement result, the first measurement result is acquired through measurement by the first receiver, the second measurement result is acquired through measurement by the second receiver, and the threshold is used for determining a plurality of thresholds corresponding to the second measurement result.

52. A terminal, comprising:
a processor;
a transceiver coupled to the processor;
a memory for storing instructions executable by the processor;
wherein the terminal is configured to determine, based on a measurement result and a threshold, to perform cell measurement by using at least one of a first receiver or a second receiver;
wherein the measurement result comprises at least one of a first measurement result or a second measurement result, the first measurement result is acquired through measurement by the first receiver, the second measurement result is acquired through measurement by the second receiver, power consumption of the first receiver is higher than power consumption of the second receiver, and the second measurement result corresponds to a plurality of thresholds.

53. The terminal of claim 52, wherein the terminal is configured to:
in a case where the first measurement result satisfies a first condition, determine to perform the cell measurement by using the second receiver, and/or, turn off the first receiver;
wherein the first condition comprises the first measurement result being greater than or equal to a first threshold.

54. The terminal of claim 52 or 53, wherein the terminal is configured to:
in a case where the measurement result satisfies a first condition, determine to perform the cell measurement by using the second receiver, and/or, turn off the first receiver;
wherein the first condition comprises at least one of the following: the first measurement result being greater than or equal to a second threshold, or the second measurement result being greater than or equal to a third threshold; and the third threshold belongs to the plurality of thresholds.

55. The terminal of claim 54, wherein the third threshold is determined from a plurality of first preset thresholds based on at least one of the following: a type of the second receiver, a type of a measured reference signal, or a reception mode of the second receiver.

56. The terminal of claim 55, wherein the plurality of first preset thresholds are configured by a network device.

57. The terminal of any one of claims 54 to 56, wherein the third threshold is determined based on a sum of a second preset threshold and a first offset value; the first offset value is determined from a plurality of first preset offset values based on at least one of the following: a type of the second receiver, a type of a measured reference signal, or a reception mode of the second receiver.

58. The terminal of claim 57, wherein the second preset threshold is configured by a network device.

59. The terminal of claim 57 or 58, wherein a configuration manner for the plurality of first preset offset values comprises at least one of the following:
being configured by a network device; being predefined in a protocol; or, being determined by the terminal

60. The terminal of any one of claims 52 to 59, wherein the terminal is configured to:
in a case where the second measurement result satisfies a second condition, determine to perform the cell measurement by using the first receiver;
wherein the second condition comprises the second measurement result being less than or equal to a fourth threshold, and the fourth threshold belongs to the plurality of thresholds.

61. The terminal of claim 60, wherein the fourth threshold is determined from a plurality of third preset thresholds based on at least one of the following: a type of the second receiver, a type of a measured reference signal, or a reception mode of the second receiver.

62. The terminal of claim 61, wherein the plurality of third preset thresholds are configured by a network device.

63. The terminal of any one of claims 60 to 62, wherein the fourth threshold is determined based on a sum of a fourth preset threshold and a second offset value; the second offset value is determined from a plurality of second preset offset values based on at least one of the following: a type of the second receiver, a type of a measured reference signal, or a reception mode of the second receiver.

64. The terminal of claim 63, wherein the fourth preset threshold is configured by a network device.

65. The terminal of claim 63 or 64, wherein a configuration manner for the plurality of second preset offset values comprises at least one of the following:
being configured by a network device; being predefined in a protocol; or, being determined by the terminal.

66. The terminal of any one of claims 52 to 65, wherein a measurement period of the second receiver is determined by at least one of the following manners:
being determined based on a discontinuous reception (DRX) cycle of the terminal; being determined based on a cycle of a reference signal measured by the second receiver; being determined based on a measurement window corresponding to a reference signal configured for the second receiver by a network device; or, being determined based on a number of sampling times of a reference signal measured by the second receiver.

67. The terminal of any one of claims 52 to 66, wherein the first measurement result and the second measurement result are measurement results for a serving cell of the terminal.

68. The terminal of any one of claims 52 to 67, wherein the terminal is configured to:
perform at least one of cell selection or cell reselection based on a measurement result difference and a fifth threshold;
wherein the measurement result difference is a difference between a third measurement result and a fourth measurement result, the third measurement result is acquired by measuring a serving cell of the terminal by the second receiver, and the fourth measurement result is acquired by measuring a neighboring cell of the serving cell of the terminal by the second receiver.

69. The terminal of claim 68, wherein the fifth threshold is determined from a plurality of fifth preset thresholds based on at least one of the following: a type of the second receiver, a type of a measured reference signal, or a reception mode of the second receiver.

70. The terminal of claim 69, wherein the plurality of fifth preset thresholds are configured by a network device.

71. The terminal of any one of claims 68 to 70, wherein the fifth threshold is determined based on a sum of a sixth preset threshold and a third offset value; the third offset value is determined from a plurality of third preset offset values based on at least one of the following: a type of the second receiver, a type of a measured reference signal, or a reception mode of the second receiver.

72. The terminal of claim 71, wherein the sixth preset threshold is configured by a network device.

73. The terminal of claim 71 or 72, wherein a configuration manner for the plurality of third preset offset values comprises at least one of the following:
being configured by a network device; being predefined in a protocol; or, being determined by the terminal.

74. The terminal of any one of claims 68 to 73, wherein the neighboring cell comprises at least one of the following: an intra-frequency neighboring cell of the serving cell, or an inter-frequency neighboring cell of the serving cell.

75. The terminal of any one of claims 52 to 74, wherein the terminal is in a radio resource control (RRC) IDLE mode or an RRC INACTIVE mode.

76. The terminal of any one of claims 52 to 75, wherein the terminal is configured to:
report, to a network device, a measurement type of the measurement by the second receiver;
wherein the measurement type is used to determine at least one of the following: a delay requirement of the measurement by the second receiver, or an accuracy requirement of the measurement by the second receiver.

77. The terminal of claim 76, wherein the measurement type is carried in a user capability reported by the terminal.

78. The terminal of claim 76 or 77, wherein the measurement type is carried in additional information of a measurement result of the second receiver reported by the terminal, and the measurement type is reported for the measurement result of the second receiver.

79. The terminal of any one of claims 76 to 78, wherein the measurement type comprises at least one of the following: a type of the second receiver; a signal-to-noise ratio during the measurement by the second receiver; a number of sampling times during the measurement by the second receiver; or a type of a reference signal measured by the second receiver.

80. The terminal of any one of claims 76 to 79, wherein the terminal supports at least one of the following: performing the measurement by the second receiver or performing early measurement report (EMR) measurement by the second receiver in a RRC CONNECTED mode.

81. The terminal of any one of claims 52 to 80, wherein the first receiver is a main receiver (MR) and the second receiver is a low power wake up receiver (LP-WUR).

82. A network device comprising:
a processor;
a transceiver coupled to the processor;
a memory for storing instructions executable by the processor;
wherein the network device is configured to configure a threshold to a terminal;
wherein the threshold is used for the terminal to determine, based on a measurement result and the threshold, to perform cell measurement by using at least one of a first receiver or a second receiver; the measurement result comprises at least one of a first measurement result or a second measurement result, the first measurement result is acquired through measurement by the first receiver, the second measurement result is acquired through measurement by the second receiver, and the threshold is used for determining a plurality of thresholds corresponding to the second measurement result.

83. The network device of claim 82, wherein the network device is configured to:
configure a plurality of first preset thresholds to the terminal;
wherein the plurality of first preset thresholds are used for the terminal to determine a third threshold based on at least one of the following: a type of the second receiver, a type of a measured reference signal, or a reception mode of the second receiver; and the third threshold is used for the terminal to determine to perform cell measurement by using the second receiver, and/or, turn off the first receiver.

84. The network device of claim 82 or 83, wherein the network device is configured to:
configure a second preset threshold to the terminal;
wherein the second preset threshold is used for the terminal to determine a third threshold based on a sum of the second preset threshold and a first offset value; the third threshold is used for the terminal to determine to perform cell measurement by using the second receiver, and/or, turn off the first receiver; and the first offset value is determined by the terminal from a plurality of first preset offset values based on at least one of the following: a type of the second receiver, a type of a measured reference signal, or a reception mode of the second receiver.

85. The network device of claim 84, wherein a configuration manner for the plurality of first preset offset values comprises at least one of the following:
being configured by the network device; being predefined in a protocol; or, being determined by the terminal.

86. The network device of any one of claims 82 to 85, wherein the network device is configured to:
configure a plurality of third preset thresholds to the terminal;
wherein the plurality of third preset thresholds are used for the terminal to determine a fourth threshold based on at least one of the following: a type of the second receiver, a type of a measured reference signal, or a reception mode of the second receiver; and the fourth threshold is used for the terminal to determine to perform cell measurement by using the first receiver.

87. The network device of any one of claims 82 to 86, wherein the network device is configured to:
configure a fourth preset threshold to the terminal;
wherein the fourth preset threshold is used for the terminal to determine a fourth threshold based on a sum of the fourth preset threshold and a second offset value; the fourth threshold is used for the terminal to determine to perform cell measurement by using the first receiver; and the second offset value is determined by the terminal from a plurality of second preset offset values based on at least one of the following: a type of the second receiver, a type of a measured reference signal, or a reception mode of the second receiver.

88. The network device of claim 87, wherein a configuration manner for the plurality of second preset offset values comprises at least one of the following:
being configured by the network device; being predefined in a protocol; or, being determined by the terminal.

89. The network device of any one of claims 82 to 88, wherein the first measurement result and the second measurement result are measurement results for a serving cell of the terminal.

90. The network device of any one of claims 82 to 89, wherein the network device is configured to:
configure a plurality of fifth preset thresholds to the terminal;
wherein the plurality of fifth preset thresholds are used for the terminal to determine a fifth threshold based on at least one of the following: a type of the second receiver, a type of a measured reference signal, or a reception mode of the second receive; and the fifth threshold is used for the terminal to perform at least one of cell selection or cell reselection based on the fifth threshold and a measurement result difference; the measurement result difference is a difference between a third measurement result and a fourth measurement result, the third measurement result is acquired by measuring a serving cell of the terminal by the second receiver, and the fourth measurement result is acquired by measuring a neighboring cell of the serving cell of the terminal by the second receiver.

91. The network device of any one of claims 82 to 90, wherein the network device is configured to:
configure a sixth preset threshold to the terminal;
wherein the sixth preset threshold is used for the terminal to determine a fifth threshold based on a sum of the sixth preset threshold and a third offset value; the fifth threshold is used for the terminal to perform at least one of cell selection or cell reselection based on the fifth threshold and a measurement result difference, the measurement result difference is a difference between a third measurement result and a fourth measurement result, the third measurement result is acquired by measuring a serving cell of the terminal by the second receiver, the fourth measurement result is acquired by measuring a neighboring cell of the serving cell of the terminal by the second receiver; and the third offset value is determined by the terminal from a plurality of third preset offset values based on at least one of the following: a type of the second receiver, a type of a measured reference signal, or a reception mode of the second receiver.

92. The network device of claim 91, wherein a configuration manner for the plurality of third preset offset values comprises at least one of the following:
being configured by the network device; being predefined in a protocol; or, being determined by the terminal.

93. The network device of any one of claims 90 to 92, wherein the neighboring cell comprises at least one of the following: an intra-frequency neighboring cell of the serving cell, or an inter-frequency neighboring cell of the serving cell.

94. The network device of any one of claims 82 to 93, wherein the terminal is in a radio resource control (RRC) IDLE mode or an RRC INACTIVE mode.

95. The network device of any one of claims 82 to 94, wherein the network device is configured to:
receive a measurement type of the measurement by the second receiver that is reported by the terminal;
wherein the measurement type is used to determine at least one of the following: a delay requirement of the measurement by the second receiver, or an accuracy requirement of the measurement by the second receiver.

96. The network device of claim 95, wherein the measurement type is carried in a user capability reported by the terminal.

97. The network device of claim 95 or 96, wherein the measurement type is carried in additional information of a measurement result of the second receiver reported by the terminal, and the measurement type is reported for the measurement result of the second receiver.

98. The network device of any one of claims 95 to 97, wherein the measurement type comprises at least one of the following: a type of the second receiver; a signal-to-noise ratio during the measurement by the second receiver; a number of sampling times during the measurement by the second receiver; or a type of a reference signal measured by the second receiver.

99. The network device of any one of claims 95 to 98, wherein the terminal supports at least one of the following: performing the measurement by the second receiver or performing early measurement report (EMR) measurement by the second receiver in a RRC CONNECTED mode.

100. The network device of any one of claims 82 to 99, wherein the first receiver is a main receiver (MR) and the second receiver is a low power wake up receiver (LP-WUR).

101. A computer-readable storage medium, wherein the computer-readable storage medium stores executable instructions thereon, and the executable instructions are loaded and executed by a processor to implement the cell measurement method according to any one of claims 1 to 30, or the threshold configuration method according to any one of claims 31 to 49.

102. A chip, comprising a programmable logic circuit or a program, wherein the chip is configured to implement, based on the programmable logic circuit or the program, the cell measurement method according to any one of claims 1 to 30 or the threshold configuration method according to any one of claims 31 to 49.

103. A computer program product, comprising computer instructions stored in a computer-readable storage medium, wherein the computer instructions from the computer-readable storage medium, when reading and executing by a processor of a computer device, enable the processor to implement the cell measurement method according to any one of claims 1 to 30 or the threshold configuration method according to any one of claims 31 to 49.
